# EUROPEAN PATENT APPLICATION

(11) **EP 4 773 129 A1**
(43) Date of publication of application: **08.07.2026**
(21) Application number: 25226652.3
(22) Date of filing: 23.12.2025
(51) Int. Cl.: G09G 3/36, G09G 3/20, G02F 1/137

(54) **CHOLESTERIC LIQUID-CRYSTAL DISPLAY DEVICE AND SCAN DRIVING METHOD THEREOF**

(30) Priority: 02.01.2025 US 202563741272 P; 18.12.2025 US 202519424146
(71) Applicant: Iris Optronics Co., Ltd., Tainan City 711010 (TW)
(72) Inventor: HO, Yu Sheng, 711010 Tainan City (TW); LIN, Hui Cheng, 711010 Tainan City (TW); YAO, Cheng Hong, 711010 Tainan City (TW); LIAO, Chi Chang, 711010 Tainan City (TW)
(74) Representative: Vossius & Partner Patentanwälte Rechtsanwälte mbB

(57) **Abstract**

A scan driving method of a cholesteric liquid-crystal (ChLC) display device is provided. The ChLC display device includes a ChLC display panel and a driving circuit section, and the ChLC display panel includes a plurality of scanning lines each having a plurality of pixel circuits. The method includes the following steps: utilizing the driving circuit section to perform a specific scanning procedure to activate the scanning lines in sequence, wherein the specific scanning procedure for each activated scanning line includes a first stage (T) having first to third periods (T1, T2, T3) arranged in sequence; and during the third period of the first stage, utilizing the driving circuit section to apply the bright-state voltage curve and the dark-state voltage curve on the pixel circuits on a first activated scanning line using a first voltage amplitude and a second voltage amplitude, respectively. The first voltage amplitude is lower than the second voltage amplitude.

## Description

### CROSS REFERENCE TO RELATED APPLICATION

This application claims the benefit of U.S. Provisional Application No. 63/741,272 filed on January 2, 2025, the entirety of which is incorporated by reference herein.

### TECHNICAL FIELD

The present disclosure relates to display devices, and in particular, to a cholesteric liquid-crystal display device and a scan driving method thereof.

### DESCRIPTION OF THE RELATED ART

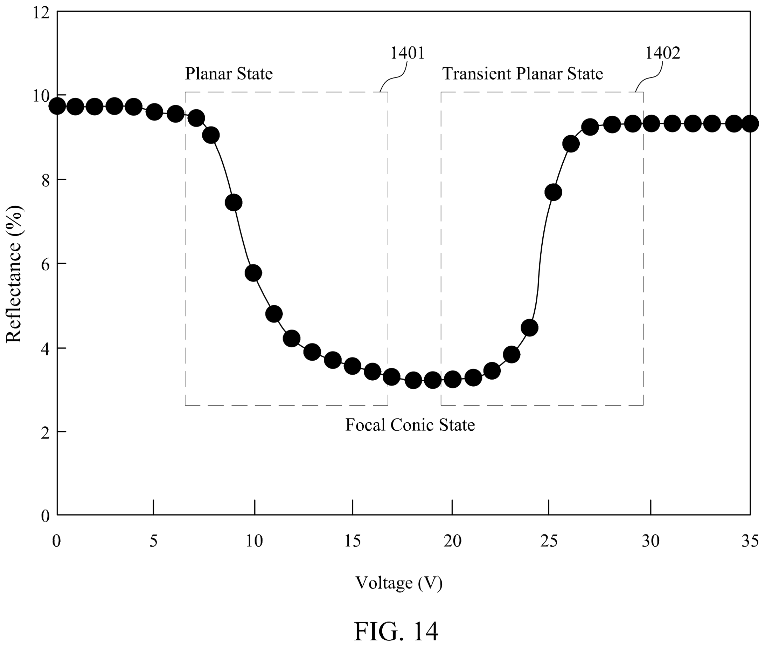

The display screen of a cholesteric liquid-crystal (ChLC) display device can be reset by controlling the ChLC molecules within the ChLC display device to enter the planar state (e.g., bright state) during a reset stage of the PWM (pulse width modulation) scanning method. The reflectance-voltage (R-V) curve of ChLC molecules within the ChLC display device can be roughly divided into two regions, such as the region 1401 and region 1402 shown in FIG. 14. In region 1401, the R-V curve exhibits a less steep slope, indicating low sensitivity to variations in ChLC display panels (e.g., slight mura), resulting in more grayscale levels but reduced contrast and color saturation. In region 1402, the R-V curve is steeper, demonstrating high sensitivity to variations in ChLC display panels (e.g., obvious mura), leading to fewer grayscale levels but enhanced contrast and color saturation. However, current driving techniques for ChLC display devices are inadequate for producing high-quality images with low mura and high contrast.

Therefore, there is a need for a scan driving method and cholesteric liquid-crystal display device using the same to resolve the aforementioned issues.

### SUMMARY

In an aspect of the present disclosure, a cholesteric liquid-crystal (ChLC) display device is provided, which includes a cholesteric liquid-crystal display panel and a driving circuit section. The ChLC display panel includes a plurality of scanning lines, each including a plurality of pixel circuits. The driving circuit section is configured to perform a specific scanning procedure to activate the scanning lines in sequence. The specific scanning procedure for each activated scanning line includes at least a first stage having a first period, a second period, and a third period arranged in sequence. During the third period of the first stage, the bright-state voltage curve and the dark-state voltage curve for the pixel circuits on a first activated scanning line have a first voltage amplitude and a second voltage amplitude, respectively. The first voltage amplitude is lower than the second voltage amplitude.

In another aspect of the present disclosure, a scan driving method of a cholesteric liquid-crystal (ChLC) display device is provided. The ChLC display device includes a ChLC display panel and a driving circuit section, and the ChLC display panel includes a plurality of scanning lines each having a plurality of pixel circuit. The method includes the following steps: utilizing the driving circuit section to perform a specific scanning procedure to activate the scanning lines in sequence, wherein the specific scanning procedure for each activated scanning line includes at least a first stage having a first period, a second period, and a third period arranged in sequence; and during the third period of the first stage, utilizing the driving circuit section to apply the bright-state voltage curve and the dark-state voltage curve on the pixel circuits on a first activated scanning line using a first voltage amplitude and a second voltage amplitude, respectively. The first voltage amplitude is lower than the second voltage amplitude.

### BRIEF DESCRIPTION OF THE DRAWINGS

Aspects of the present disclosure are best understood from the following detailed description when read with the accompanying figures. It is noted that in accordance with the standard practice in the industry, various features are not drawn to scale. In fact, the dimensions of the various features may be arbitrarily increased or reduced for clarity of discussion.
FIG. 1 is a block diagram of an electronic device in accordance with an embodiment of the present disclosure.
FIG. 2 is a diagram of the display device in accordance with the embodiment of FIG. 1.
FIG. 3 is a cross section of the display panel in FIG. 2.
FIG. 4A is a waveform diagram of a selection stage within the scanning procedure of a specific driving mode of the display panel in accordance with some embodiments of the present disclosure.
FIGS. 4B-1 to 4B-4 are waveform diagrams of the scanning procedure of the S+PWM driving mode in accordance with some embodiments of the present disclosure.
FIGS. 5A-1 to 5A-4 are waveform diagrams illustrating the manipulation stage within the SD+ scanning procedure in accordance with the first embodiment of the present disclosure.
FIGS. 5B-1 to 5B-4 are waveform diagrams illustrating the speeding stage within the SD+ scanning procedure in accordance with the first embodiment of the present disclosure.
FIGS. 5C-1 to 5C-4 are waveform diagrams illustrating the selection stage within the SD+ scanning procedure in accordance with the first embodiment of the present disclosure.
FIGS. 6A-1 to 6A-4 are waveform diagrams illustrating the manipulation stage within the SD+ scanning procedure in accordance with the second embodiment of the present disclosure.
FIGS. 6B-1 to 6B-4 are waveform diagrams illustrating the selection stage within the SD+ scanning procedure in accordance with the second embodiment of the present disclosure.
FIGS. 7A-1 to 7A-4 are waveform diagrams illustrating the manipulation stage within the SD+ scanning procedure in accordance with the third embodiment of the present disclosure.
FIGS. 7B-1 to 7B-4 are waveform diagrams illustrating the selection stage within the SD+ scanning procedure in accordance with the third embodiment of the present disclosure.
FIGS. 7C-1 to 7C-4 are waveform diagrams illustrating the compensation stage within the SD+ scanning procedure in accordance with the third embodiment of the present disclosure.
FIGS. 8A-1 to 8A-4 are waveform diagrams illustrating the manipulation stage within the SD+ scanning procedure in accordance with the fourth embodiment of the present disclosure.
FIGS. 8B-1 to 8B-4 are waveform diagrams illustrating the selection stage within the SD+ scanning procedure in accordance with the fourth embodiment of the present disclosure.
FIGS. 8C-1 to 8C-4 are waveform diagrams illustrating the compensation stage within the SD+ scanning procedure in accordance with the fourth embodiment of the present disclosure.
FIGS. 9A-1 to 9A-4 are waveform diagrams illustrating the manipulation stage within the SD+ scanning procedure in accordance with the fifth embodiment of the present disclosure.
FIGS. 9B-1 to 9B-4 are waveform diagrams illustrating the selection stage within the SD+ scanning procedure in accordance with the fifth embodiment of the present disclosure.
FIGS. 9C-1 to 9C-4 are waveform diagrams illustrating the compensation stage within the SD+ scanning procedure in accordance with the fifth embodiment of the present disclosure.
FIGS. 10A-1 to 10A-4 are waveform diagrams illustrating the manipulation stage within the SD+ scanning procedure in accordance with the sixth embodiment of the present disclosure.
FIGS. 10B-1 to 10B-4 are waveform diagrams illustrating the selection stage within the SD+ scanning procedure in accordance with the sixth embodiment of the present disclosure.
FIGS. 10C-1 to 10C-4 are waveform diagrams illustrating the compensation stage within the SD+ scanning procedure in accordance with the sixth embodiment of the present disclosure.
FIGS. 10D-1 to 10D-4 are waveform diagrams illustrating the non-selection stage within the SD+ scanning procedure in accordance with the sixth embodiment of the present disclosure.
FIGS. 11A-1 to 11A-4 are waveform diagrams illustrating the manipulation stage within the SD+ scanning procedure in accordance with the seventh embodiment of the present disclosure.
FIGS. 11B-1 to 11B-4 are waveform diagrams illustrating the selection stage within the SD+ scanning procedure in accordance with the seventh embodiment of the present disclosure.
FIGS. 11C-1 to 11C-4 are waveform diagrams illustrating the compensation stage within the SD+ scanning procedure in accordance with the seventh embodiment of the present disclosure.
FIGS. 11D-1 to 11D-4 are waveform diagrams illustrating the non-selection stage within the SD+ scanning procedure in accordance with the seventh embodiment of the present disclosure.
FIGS. 12A-1 to 12A-4 are waveform diagrams illustrating the selection stage within the SD+ scanning procedure in accordance with the eighth embodiment of the present disclosure.
FIGS. 12B-1 to 12B-4 are waveform diagrams illustrating the compensation stage within the SD+ scanning procedure in accordance with the eighth embodiment of the present disclosure.
FIGS. 13A-1 to 13A-4 are waveform diagrams illustrating the selection stage within the SD+ scanning procedure in accordance with the ninth embodiment of the present disclosure.
FIGS. 13B-1 to 13B-4 are waveform diagrams illustrating the compensation stage within the SD+ scanning procedure in accordance with the ninth embodiment of the present disclosure.
FIG. 14 is a diagram illustrating a reflectance-voltage curve of cholesteric liquid-crystal molecules.

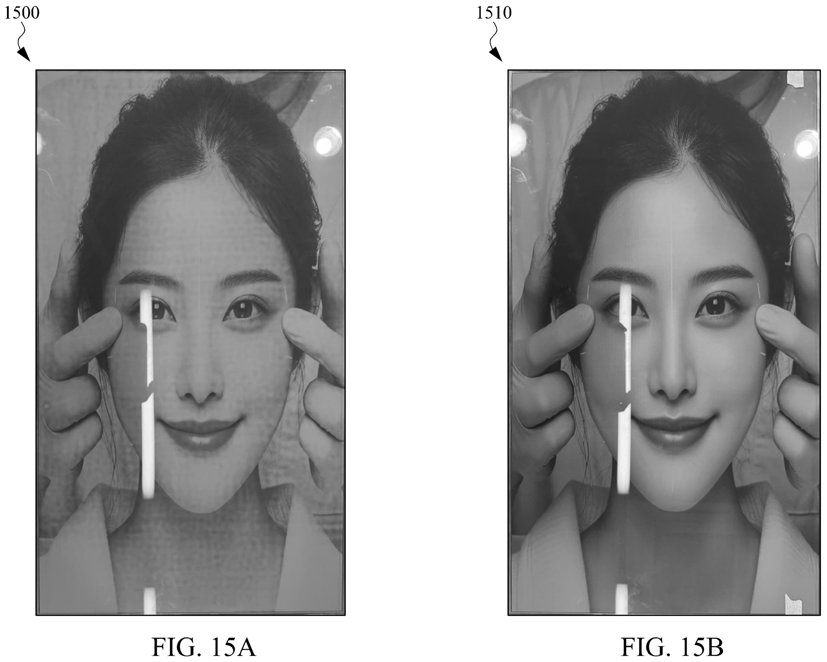

FIG. 15A illustrates an output image rendered by the display panel with only the S+PWM technique.
FIG. 15B illustrates an output image rendered by the display panel using the S+PWM technique with the method described in any of the first to ninth embodiments of the present disclosure.

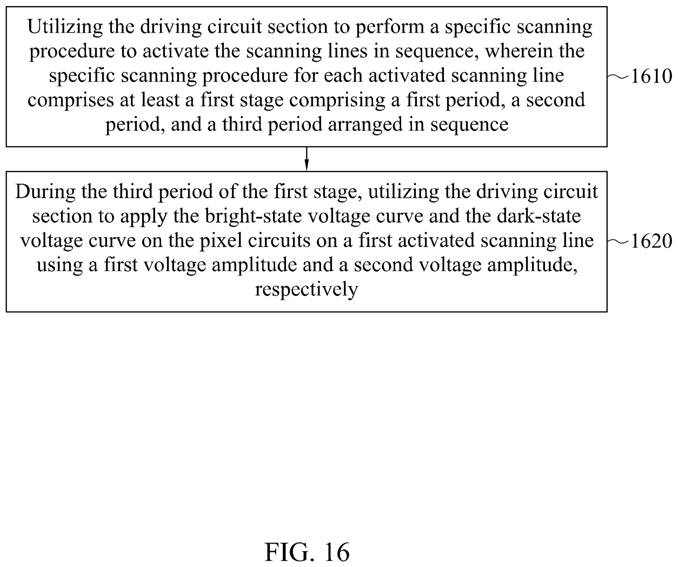

FIG. 16 is a flowchart of a scan driving method of a cholesteric liquid-crystal display device in accordance with some embodiments of the present disclosure.

### DETAILED DESCRIPTION

The following disclosure provides many different embodiments, or examples, for implementing different features of the provided subject matter. Specific examples of operations, components, and arrangements are described below to simplify the present disclosure. These are, of course, merely examples and are not intended to be limiting. For example, a first operation performed before or after a second operation in the description may include embodiments in which the first and second operations are performed together, and may also include embodiments in which additional operations may be performed between the first and second operations. For example, the formation of a first feature over, on or in a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Time relative terms, such as "prior to," "before," "posterior to," "after" and the like, may be used herein for ease of description to describe the relationship of one operation or feature to another operation(s) or feature(s) as illustrated in the figures. Such time relative terms are intended to encompass different sequences of the operations depicted in the figures. Further, spatially relative terms, such as "beneath," "below," "lower," "above," "upper" and the like, may be used herein for ease of description to describe the relationship of one element or feature to another element(s) or feature(s) as illustrated in the figures. Such spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. Relative terms for connections, such as "connect," "connected," "connection," "couple," "coupled," "in communication," and the like, may be used herein for ease of description to describe an operational connection, coupling, or linking one between two elements or features. The relative terms for connections are intended to encompass different connections, couplings, or linkings of the devices or components. The devices or components may be directly or indirectly connected, coupled, or linked to one another through, for example, another set of components. The devices or components may be connected, coupled, or linked with each other by wire and/or wirelessly.

As used herein, the singular terms "a," "an," and "the" may include plural referents unless the context clearly indicates otherwise. For example, reference to a device may include multiple devices unless the context clearly indicates otherwise. The terms "comprising" and "including" may indicate the existences of the described features, integers, steps, operations, elements, and/or components, but may not exclude the existence of combinations of one or more of the features, integers, steps, operations, elements, and/or components. The term "and/or" may include any or all combinations of one or more listed items.

Additionally, amounts, ratios, and other numerical values are sometimes presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified.

The nature and use of the embodiments are discussed in detail as follows. It should be appreciated, however, that the present disclosure provides many applicable inventive concepts that can be embodied in a wide variety of specific contexts. The specific embodiments discussed are merely illustrative of specific ways to embody and use the disclosure, without limiting the scope thereof.

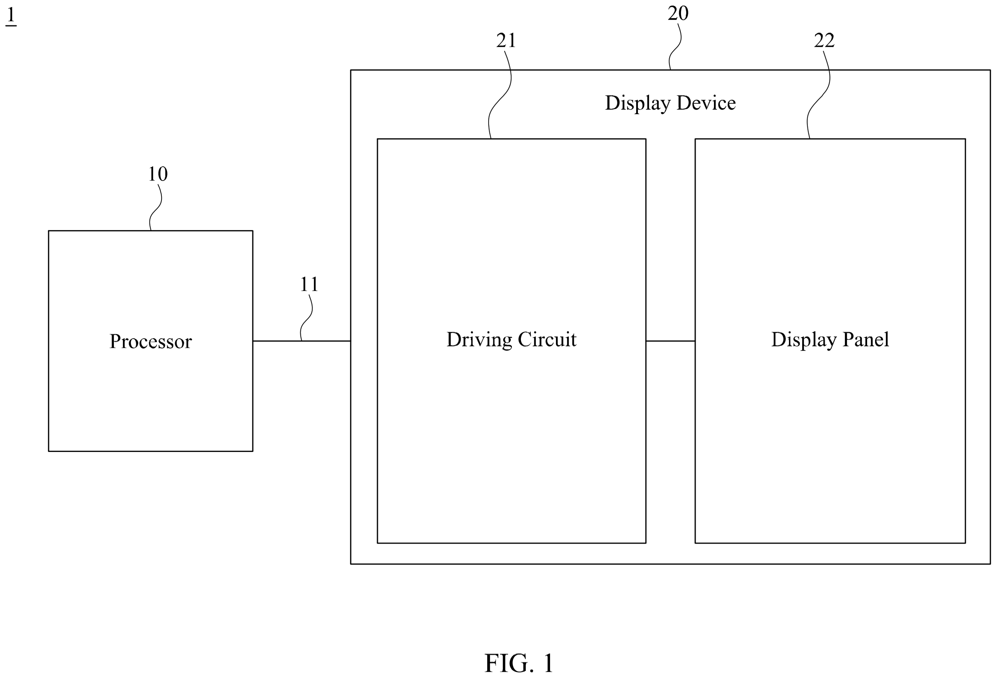

FIG. 1 is a block diagram of an electronic device in accordance with an embodiment of the present disclosure.

In some embodiments, the electronic device 1 may be an E-book, and E-paper, an electronic whiteboard, a temperature display board, etc., but the present disclosure is not limited thereto. As depicted in FIG. 1, the electronic device 1 may include a processor 10 and a display device 20. The processor 10 may be a central processing unit (CPU), a digital signal processor (DSP), an image signal processor (ISP), a microprocessor, a microcontroller unit (MCU), or any other equivalent circuit, but the present disclosure is not limited thereto. The display device 20 may be cholesteric liquid-crystal display (ChLCD) device.

In some embodiments, the display device 20 may include a driving circuit 21 and a display panel 22. The display panel 22 may be a ChLCD panel which includes multiple ChLC layers for red, green, and blue pixel arrays. Additionally, the driving circuit 21 may be configured to drive the display panel 22 using either one of a DDS (dynamic driving scheme) driving mode, a PWM (pulse width modulation) driving mode, a SD+ driving mode, and a HCSD+ (high-contrast SD+) driving mode. In other words, the display panel 22 can be driven either in the DDS driving mode, PWM driving mode, SD+ driving mode, or the HCSD+ driving mode, depending on the driving mode selected by the driving circuit 21. The details for the SD+ and HCSD+ driving modes will be described later.

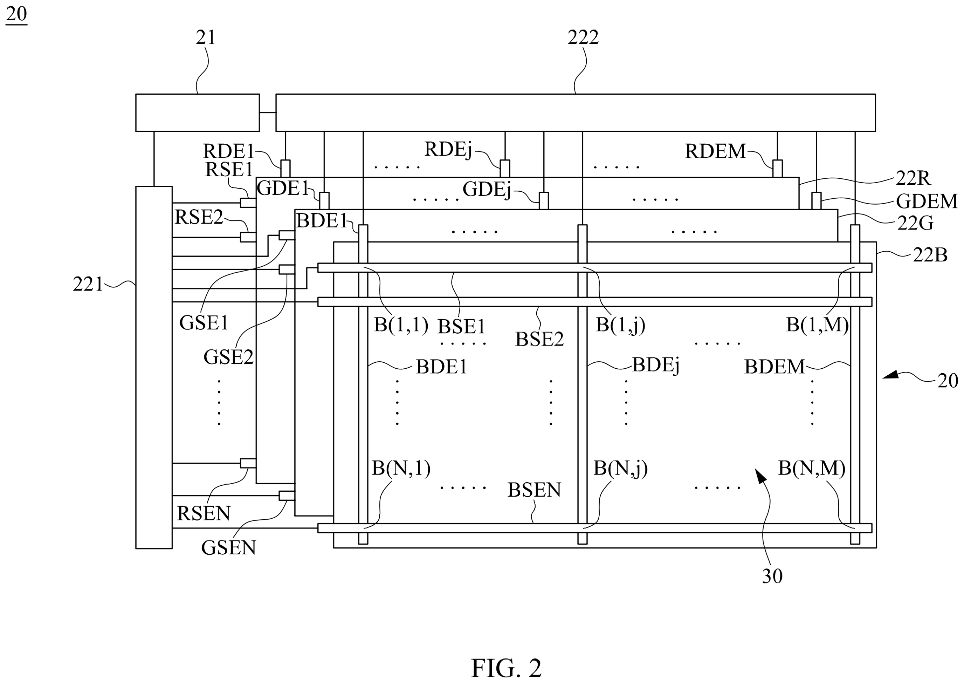

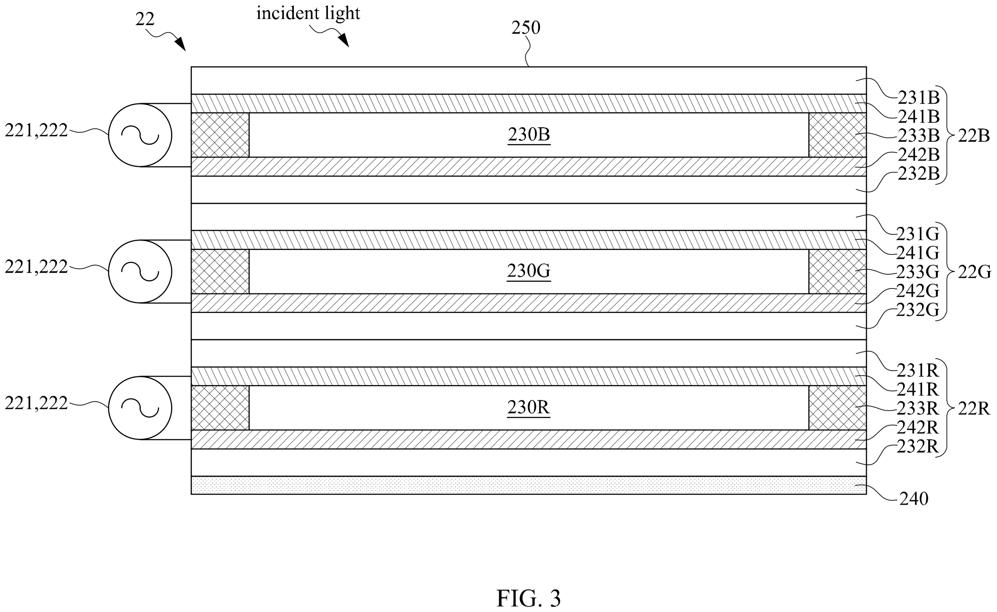

FIG. 2 is a diagram of the display device in accordance with the embodiment of FIG. 1. FIG. 3 is a cross section of the display panel in FIG. 2.

In some embodiments, the display panel 22 may include a plurality of display units 22B, 22G, and 22R, a scanning electrode driving circuit 221, and a data electrode driving circuit 222, as depicted in FIG. 2. Additionally, the display units 22B, 22G, and 22R can be stacked to form the display panel, with the display units 22B, 22G, and 22R being the topmost, middle, and bottom display units, respectively, as shown in FIG. 3. The display units 22B, 22G, and 22R may include pixels that display blue, green, and red colors, respectively, allowing the display panel 22 to render a screen 30 (e.g., a color display screen). The display unit 22B may include scanning electrodes BSE1 to BSEN (e.g., N electrodes along the Y-axis) and data electrodes BDE1 to BDEM (e.g., M electrodes along the X-axis). The scanning electrodes and data electrodes in the display units 22G and 22R are arranged in a similar manner.

In some embodiments, the scanning electrodes BSE1 to BSEN can be referred to as common (COM) electrodes, and the data electrodes BDE1 to BDEM can be referred to as segment (SEG) electrodes. Furthermore, the scanning electrodes BSE1 to BSEN and the data electrodes BDE1 to BDEN intersect in the top view of the display panel 22, as depicted in FIG. 2.

In some embodiments, a pixel circuit (e.g., a ChLC pixel circuit, not explicitly shown in FIG. 2) is disposed at each intersection between the scanning electrodes BSE1 to BSEN and data electrodes BDE1 to BDEM within the display unit 22B. This arrangement allows the pixel circuits within the display unit 22B to form a blue pixel array with a resolution of M*N. For example, the pixel circuit located at the intersection between the scanning electrode BSE1 and the data electrode BDE1 within the display unit 22B (e.g., for blue color) can be assigned the coordinates B(1, 1), while the pixel circuit at the intersection between the scanning electrode BSEN and the data electrode BDEj within the display unit 22B can be assigned the coordinates B(N, j), and so on. The coordinates of each pixel circuit within the display units 22G and 22R can be designated in a manner similar to that within the display unit 22B.

Referring to FIG. 3, in some embodiments, the display units 22B, 22G, and 22R may be laminated in this order on a surface (e.g., surface 250) of incident light. The display unit 22B may include a liquid crystal layer 230B, substrates 231B and 232B, layers 241B and 242B, and sealing materials 233B. For example, the liquid crystal layer 230B may be a cholesteric liquid-crystal (ChLC) layer which is sealed between the substrates 231B and 232B opposite to each other by the sealing material 233B applied onto the edges of the substrates 231B and 232B. Additionally, the average refractive index n and the helical pitch p of liquid crystal layer 230B are determined such that, for example, the wavelength λ is approximately 480 nm. The average refractive index n can be adjusted by selecting a liquid crystal material and a chiral material, and the helical pitch p can be adjusted by adjusting the content of the chiral material. Accordingly, the liquid crystal layer 230B may selectively reflect blue light in a planar state. The layers 241B and 242B may refer to regions on which the scanning electrodes BSE1 to BSEN and data electrodes BDE1 to BDEM within the display unit 22B are disposed, that are electrically connected to the scanning electrode driving circuit 221 and the data electrode driving circuit 222, respectively. Furthermore, in the focal conic state, the liquid crystal molecules within the liquid crystal layer 230B are disorderly rotated in the electrodes (e.g., layers 241B and 242B) to form helical structure, and the helical axes of the helical structures are randomly orientated. As a result, the selectivity of the liquid crystal layer 230B with respect to a reflection wavelength is lost, and the liquid crystal layer 230B transmits most of incident light. The transmitted light is absorbed by a light absorbing layer 240 whereby dark (black) display is achieved. The light absorbing layer 240 may be provided on the bottom surface of the display unit 22R.

Similarly, the display unit 22G may include a liquid crystal layer 230G, substrates 231G and 232G, layers 241G and 242G, and sealing materials 233G. For example, the liquid crystal layer 230G may be a cholesteric liquid crystal (ChLC) layer which is sealed between the substrates 231G and 232G (e.g., transparent substrates) opposite to each other by the sealing material 233G applied onto the edges of the substrates 231G and 232G. Additionally, the average refractive index n and the helical pitch p of liquid crystal layer 230G are determined such that, for example, the wavelength λ is approximately 550 nm, allowing the liquid crystal layer 230G to selectively reflect green light in a planar state. Similarly, although the scanning electrodes (e.g., GSE1 to GSEN) and data electrodes (e.g., GDE1 to GDEM) within the display unit 22G are not explicitly shown in FIGs. 2 and 3, the layers 241G and 242G may refer to regions on which these scanning electrodes GSE1 to GSEN and data electrodes GDE1 to GDEM within the display unit 22G are disposed, that are electrically connected to the scanning electrode driving circuit 221 and the data electrode driving circuit 222, respectively.

Moreover, the display unit 22R may include a liquid crystal layer 230R, substrates 231R and 232R, layers 241R and 242R, and sealing materials 233R. For example, the liquid crystal layer 230R may be a cholesteric liquid crystal (ChLC) layer which is sealed between the substrates 231R and 232R (e.g., transparent substrates) opposite to each other by the sealing material 233R applied onto the edges of the substrates 231R and 232R. Additionally, the average refractive index n and the helical pitch p of liquid crystal layer 230R are determined such that, for example, the wavelength λ is approximately 700 nm, allowing the liquid crystal layer 230R to selectively reflect red light in a planar state. Similarly, although the scanning electrodes (e.g., RSE1 to RSEN) and data electrodes (e.g., RDE1 to RDEM) within the display unit 22R are not explicitly shown in FIGS. 2 and 3, the layers 241R and 242R may refer to regions on which these scanning electrodes RSE1 to RSEN and data electrodes RDE1 to RDEM within the display unit 22R are disposed, that are electrically connected to the scanning electrode driving circuit 221 and the data electrode driving circuit 222, respectively. The operations of the ChLC molecules within the liquid crystal layers 230G and 230R in the planar state and focal conic states may be similar to those within the liquid crystal layer 230B, and thus details thereof are not be repeated here.

In some embodiments, the substrates 231B, 232B, 231G, 232G, 231R, and 232R may be implemented using a transmissive material, such as polycarbonate (PC), glass, polyethylene terephthalate (PET) film, etc., enabling them to transmit light. Additionally, the light absorbing layer 240 can be disposed on a bottom surface of the substrate 232R of the display unit 22R, effectively absorbing any transmitted light on that surface to achieve dark (black) display. It should be noted that the structure of the display panel 22 shown in FIG. 3 is for purposes of description, and it can be adjusted according to practical needs.

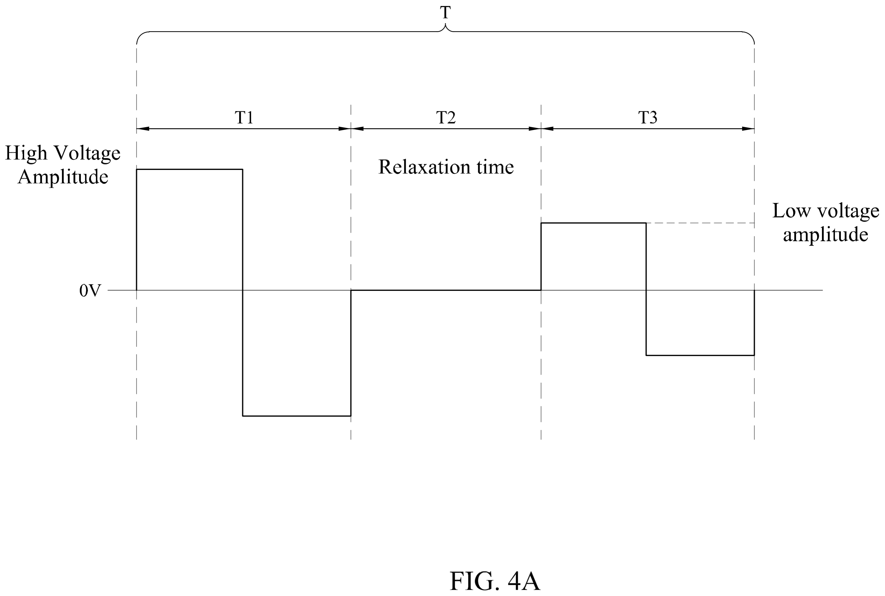

FIG. 4A is a waveform diagram of a selection stage within the scanning procedure of a specific driving mode of the display panel 22 in accordance with some embodiments of the present disclosure.

In some embodiments, the selection stage with a duration T may include three stages, such as a first period, a second period, and a third period with durations T1, T2, and T3, respectively. The first period (e.g., duration T1) corresponds to region 1402 within the R-V curve shown in FIG. 14, which is configured to drive the display panel 22 to render an image having better bright-state and dark-state display with higher contrast. The third period (e.g., duration T3) corresponds to region 1401 within the R-V curve shown in FIG. 14, which is configured to drive the display panel 22 to render an image with reduced mura. For example, regions 1401 and 1402 may correspond to a low-voltage transition region and a high-voltage transition region on the R-V curve, respectively. Additionally, the second period (e.g., duration T2) is between the first period and the third period, which is configured to provide a relaxation time between the first period and the third period to stabilize the ChLC molecules of the pixel circuits on the activated scanning electrode with a sensed voltage of approximately 0V. In some embodiments, the first period (e.g., duration T1) may have a higher voltage amplitude compared to the third period (e.g., duration T3), as depicted in FIG. 4A.

In some embodiments, the durations T1, T2 and T3 can be equal. Alternatively, the durations T1, T2, and T3 can be different. In some embodiments, the relaxation time within the second period (e.g. duration T2) is at least 0.5 millisecond.

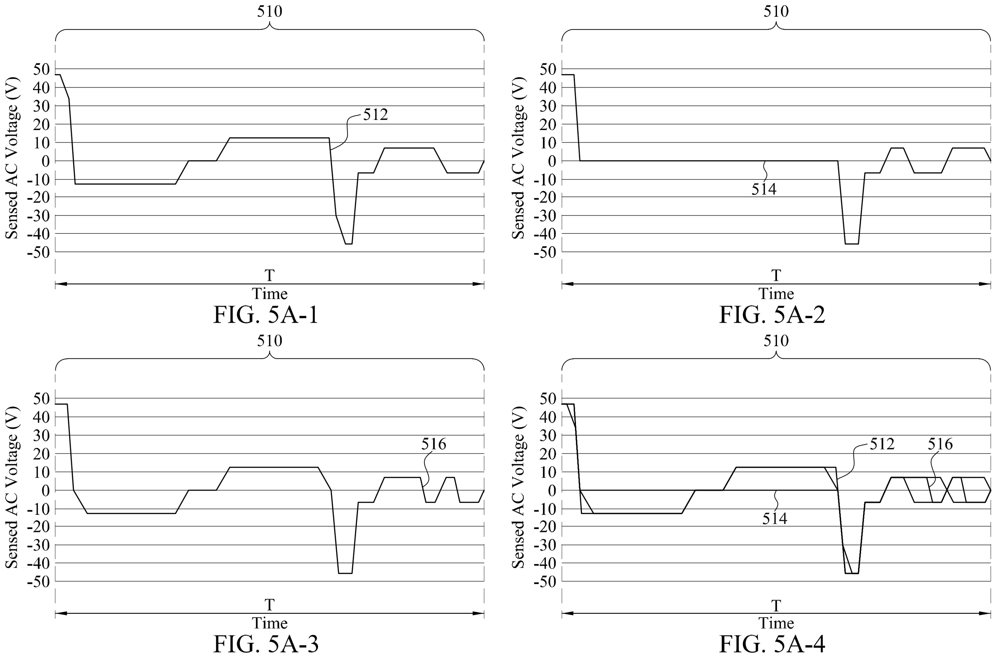

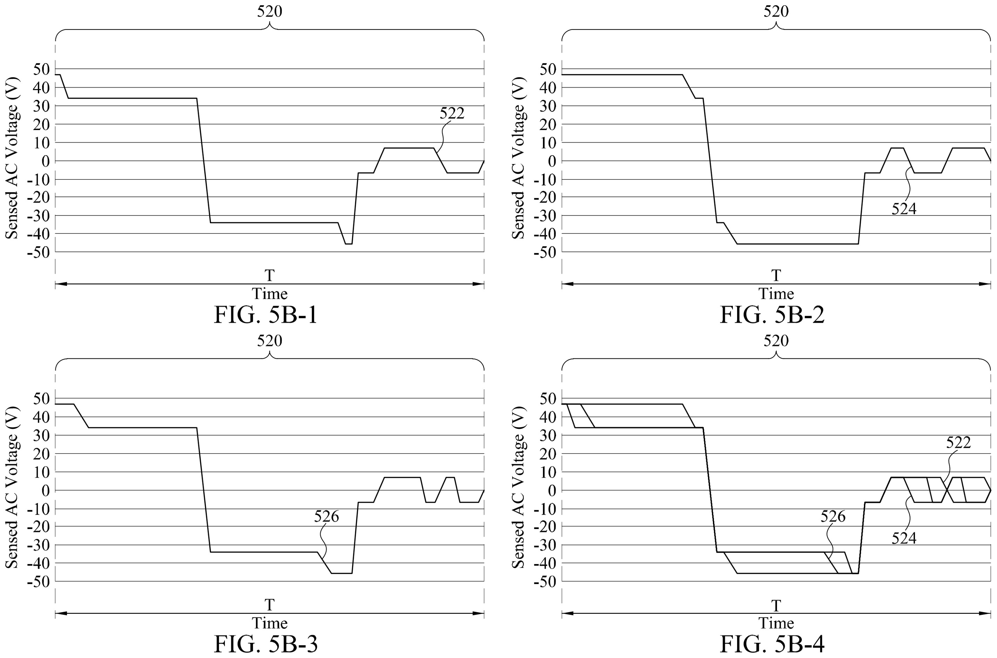

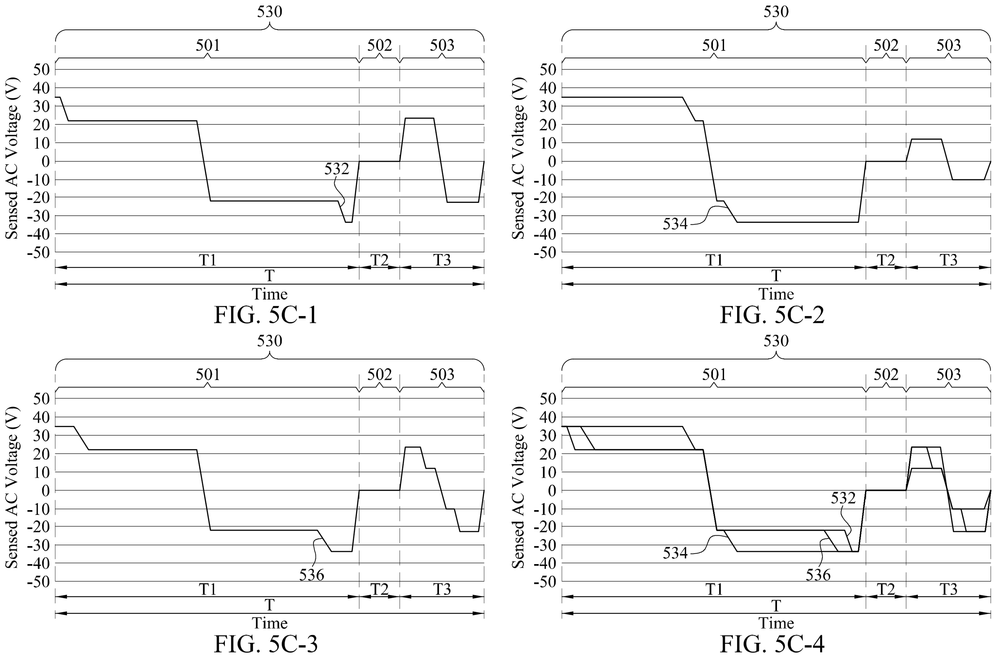

It should be noted that FIG. 4A is for illustrative purposes, the first period and the third period may each comprise one or more alternating-current (AC) voltage pulses with an equal voltage amplitude or different voltage amplitudes, depending on the driving mode being used, the details of which will be described with reference to FIGS. 5 to 13. In some embodiments, one of the modified PWM driving modes, including SD+, S+PWM, and HCSD+ (high-contrast SD+) driving modes, is used during the first period, while the PWM driving mode is used during the third period.

Certain aspects and advantages of the present disclosure may be more clearly understood and/or appreciated with reference to the following commonly owned United States patent application and provisional applications, the disclosure of each of which is being incorporated herein in its entirety by the following references. The details of the SD+ driving mode can be referred to in the U.S. patent application Serial No. 18/632,147 filed on April 10, 2024 (now granted as U.S. 12,334,031 B2), entitled "CHOLESTERIC LIQUID CRYSTAL DISPLAY DEVICE AND METHOD FOR DRIVING THE SAME". The details of the S+PWM driving mode can be referred to in the U.S. patent application Serial No. 19/098,956 filed on April 2, 2025, entitled "SCAN DRIVING METHOD FOR HIGH-QUALITY IMAGE AND CHOLESTERIC LIQUID-CRYSTAL DISPLAY DEVICE USING THE SAME". The details of the HCSD+ driving mode can be referred to in the U.S. patent application Serial No. 19/328,831 filed on September 15, 2025, entitled "SCAN DRIVING METHOD FOR RENDERING HIGH-CONTRAST IMAGE AND CHOLESTERIC LIQUID-CRYSTAL DISPLAY DEVICE USING THE SAME".

FIGS. 4B-1 to 4B-4 are waveform diagrams of the scanning procedure of the S+PWM driving mode in accordance with some embodiments of the present disclosure.

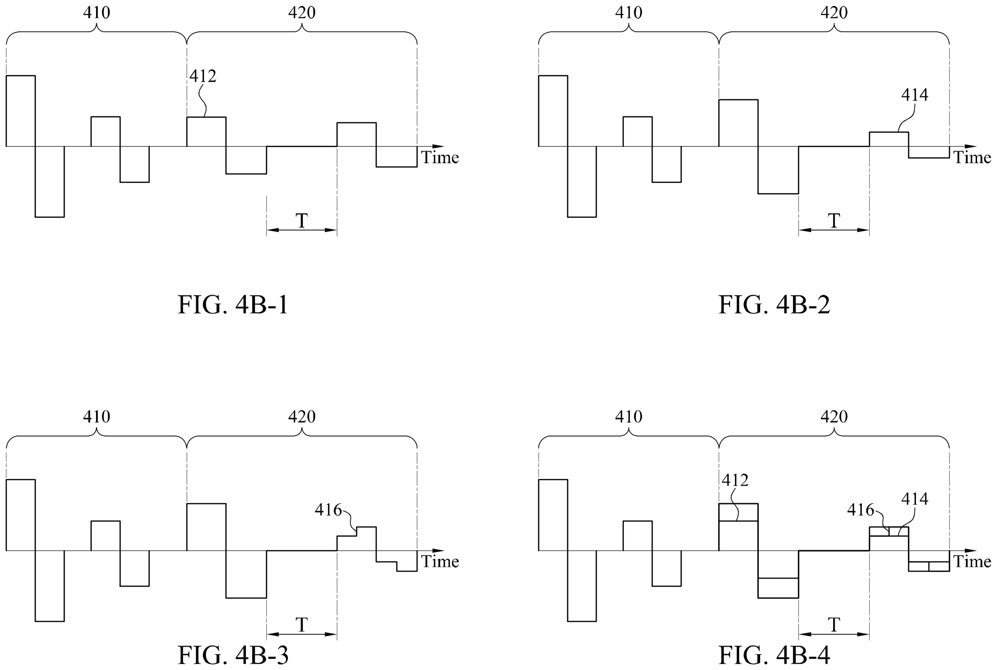

In FIGS. 4B-1 to 4B-3, curves 412, 414, and 416 are regarded as a dark-state voltage, a bright-state voltage, and grayscale voltage applied to a pixel circuit on the activated scanning electrode during the selection stage (SEL) of the S+PWM driving mode, respectively. Additionally, curves 412, 414, and 416 are collectively shown in FIG. 4B-4.

The scanning procedure of the S+PWM driving mode includes stages 410 and 420, which corresponds to a full screen reset stage and a selection stage, respectively. The first AC pulse within the stage 410 may apply a relatively high voltage amplitude to the ChLC molecules of the pixel circuits on the activated scanning electrode to transition to the homeotropic state or planar state (e.g., bright screen). The second AC pulse within stage 410 may apply a relatively low voltage amplitude to the ChLC molecules of the pixel circuits on the activated scanning electrode to transition to the focal conic state (e.g., dark screen).

During the stage 420, the first AC pulse exhibits a higher voltage amplitude, and the second AC pulse exhibits a lower voltage amplitude, with a relaxation time (e.g., duration T) between the first AC pulse and the second AC pulse.

It should be noted that no matter whether the SD+ driving mode (e.g., FIG. 4A) or S+PWM driving mode (e.g., FIGS. 4B-1 to 4B-4) is used, the high voltage amplitude of the first AC pulse may be equal to or higher than 20V, and the low voltage amplitude of the second AC pulse may be lower than 20V.

In the following embodiments of FIGS. 5 to 13, the dark-state voltage curve and bright-state voltage curve refer to the dark-state voltage pulses (e.g., for grayscale value = 0, which is a minimum grayscale value) and bright-state voltage pulses (e.g., for grayscale value = 15, which is a maximum grayscale value), respectively. The grayscale voltage curve refers to grayscale voltage pulses. It should be noted that the HCSD+ or S+PWM driving mode can also be used in the first period within the selection stage, and the remaining stages of the selected driving mode (e.g., one of the SD+, S+PWM, and HCSD+ driving modes) can be used together with the selection stage shown in FIGS. 5 to 13.

### Case 1

FIGS. 5A-1 to 5A-4 are waveform diagrams illustrating the manipulation stage within the SD+ scanning procedure in accordance with the first embodiment of the present disclosure. FIGS. 5B-1 to 5B-4 are waveform diagrams illustrating the speeding stage within the SD+ scanning procedure in accordance with the first embodiment of the present disclosure. FIGS. 5C-1 to 5C-4 are waveform diagrams illustrating the selection stage within the SD+ scanning procedure in accordance with the first embodiment of the present disclosure.

In the first embodiment, the stages of the pixel circuits on four adjacent scan lines during the SD+ scanning procedure have equal durations and can be arranged in a pipelined manner in the sequence of a manipulation stage (MP), a speeding stage (SP), a selection stage (SEL), and a non-selection stage (NS), as shown in Table 1. Each of the time periods TP1 to TP8 has an equal duration T. The waveforms associated with the manipulation stage (MP), speeding stage (SP), and selection stage (SEL) are denoted as stages 510, 520, and 530, as shown in FIGS. 5A-1 to 5A-4, 5B-1 to 5B-4, and 5C-1 to 5C-4, respectively. It should be noted that the non-selection stage (NS) is not shown in these figures.

**Table 1**

| Scan line | TP1 | TP2 | TP3 | TP4 | TP5 | TP6 | TP7 | TP8 |
|---|---|---|---|---|---|---|---|---|
| 1 | MP | SP | SEL | NS | NS | NS | NS | NS |
| 2 | NS | MP | SP | SEL | NS | NS | NS | NS |
| 3 | NS | NS | MP | SP | SEL | NS | NS | NS |
| 4 | NS | NS | NS | MP | SP | SEL | NS | NS |

In FIGS. 5A-1 to 5A-3, curves 512, 514, and 516 are regarded as a dark-state voltage, a bright-state voltage, and grayscale voltage applied to a pixel circuit on the activated scanning electrode during the manipulation stage (MP), respectively. Additionally, curves 512, 514, and 516 are collectively shown in FIG. 5A-4. In FIGS. 5A-1 to 5A-3, curves 522, 524, and 526 are regarded as a dark-state voltage, a bright-state voltage, and grayscale voltage applied to a pixel circuit on the activated scanning electrode during the speeding stage (SP), respectively. Additionally, curves 522, 524, and 526 are collectively shown in FIG. 5A-4. In FIGS. 5C-1 to 5C-3, curves 532, 534, and 536 are regarded as a dark-state voltage, a bright-state voltage, and grayscale voltage applied to a pixel circuit on the activated scanning electrode during the selection stage (SEL), respectively. Additionally, curves 532, 534, and 536 are collectively shown in FIG. 5C-4.

In the first embodiment, the selection stage (e.g., stage 530) includes a first period 501, a second period 502, and a third period 503 with durations T1, T2, and T3, respectively, as shown in FIGS. 5C-1 to 5C-4. The first period 501 (e.g., duration T1) may include one or more AC voltage pulses of a specific driving mode, such as the SD+ driving mode. The second period 502 may be a relaxation time during which the sensed voltage of the ChLC molecules of the pixel circuits on the activated scanning electrode is approximately or substantially equal to 0V for curves 532, 534, and 536. The third period 503 follows the second period 502 (e.g., relaxation time), and it includes at least one PWM voltage pulse of the PWM scanning procedure.

In the first embodiment, during the third period 503 of the selection stage (e.g., stage 530), the bright-state voltage curve 534 may exhibit a relatively low voltage amplitude compared to the dark-state voltage curve 532, as shown by duration T3 in FIGS. 5C-1 and 5C-2. Additionally, during the first period 501, the bright-state voltage curve 534 may exhibit a relatively high voltage amplitude compared to the dark-state voltage curve 532, as shown by FIGS. 5C-1 and 5C-2 It should be noted that the voltage amplitudes of the dark-state voltage curve 532 and the bright-state voltage curve 534 within the first period 501 are higher than those within the third period 503.

### Case 2

FIGS. 6A-1 to 6A-4 are waveform diagrams illustrating the manipulation stage within the SD+ scanning procedure in accordance with the second embodiment of the present disclosure. FIGS. 6B-1 to 6B-4 are waveform diagrams illustrating the selection stage within the SD+ scanning procedure in accordance with the second embodiment of the present disclosure.

In the second embodiment, the stages of the pixel circuits on four adjacent scan lines during the SD+ scanning procedure have equal durations and can be arranged in a pipelined manner in the sequence of a manipulation stage (MP), a selection stage (SEL), and a non-selection stage (NS), as shown in Table 2. Each of the time periods TP1 to TP8 has an equal duration T. The waveforms associated with the manipulation stage (MP) and selection stage (SEL) are denoted as stages 610 and 620, an shown in FIGS. 6A-1 to 6A-4 and 6B-1 to 6B-4, respectively. It should be noted that the non-selection stage (NS) is not shown in these figures.

**Table 2**

| Scan Line | TP1 | TP2 | TP3 | TP4 | TP5 | TP6 | TP7 | TP8 |
|---|---|---|---|---|---|---|---|---|
| 1 | MP | SEL | NS | NS | NS | NS | NS | NS |
| 2 | NS | MP | SEL | NS | NS | NS | NS | NS |
| 3 | NS | NS | MP | SEL | NS | NS | NS | NS |
| 4 | NS | NS | NS | MP | SEL | NS | NS | NS |

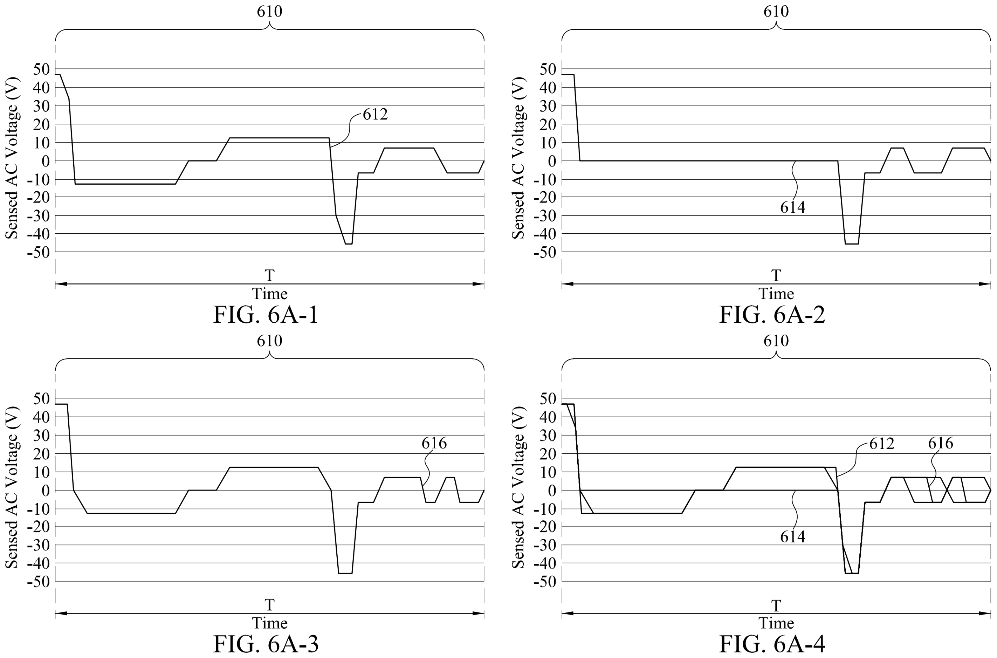

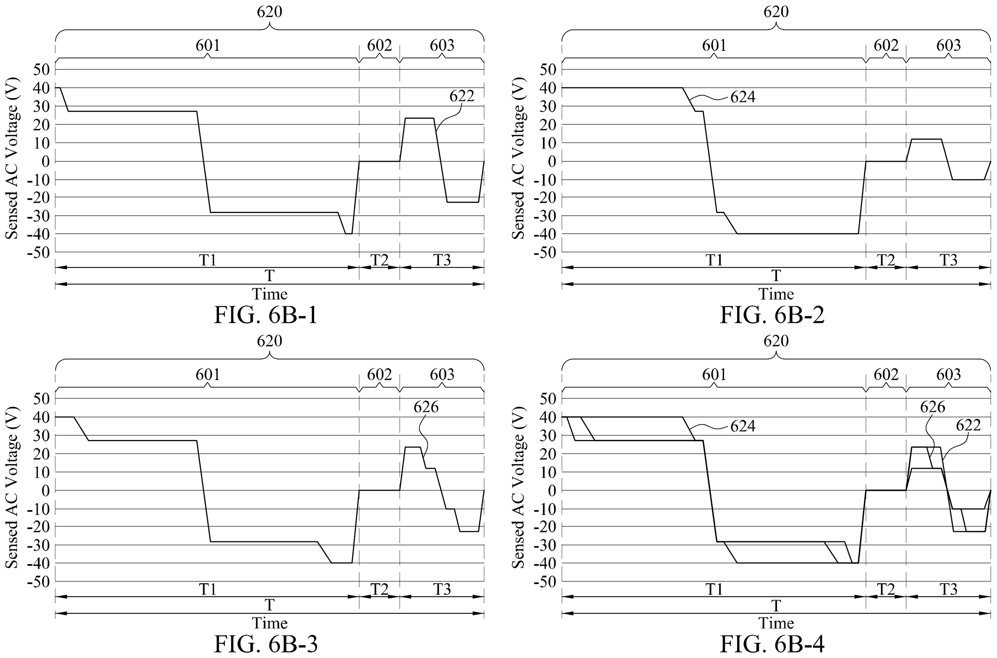

In FIGS. 6A-1 to 6A-3, curves 612, 614, and 616 are regarded as a dark-state voltage, a bright-state voltage, and grayscale voltage applied to a pixel circuit on the activated scanning electrode during the manipulation stage (MP), respectively. Additionally, curves 612, 614, and 616 are collectively shown in FIG. 6A-4. In FIGS. 6B-1 to 6B-3, curves 622, 624, and 626 are regarded as a dark-state voltage, a bright-state voltage, and grayscale voltage applied to a pixel circuit on the activated scanning electrode during the selection stage (SEL), respectively. Additionally, curves 622, 624, and 626 are collectively shown in FIG. 6B-4.

In the second embodiment, the selection stage (e.g., stage 620) includes a first period 601, a second period 602, and a third period 603 with durations T1, T2, and T3, respectively, as shown in FIGS. 6B-1 to 6B-4. The first period 601 may include one or more AC voltage pulses of a specific driving mode, such as the SD+ driving mode. The second period 602 may be a relaxation time during which the sensed voltage of the ChLC molecules of the pixel circuits on the activated scanning electrode is approximately or substantially equal to 0V for curves 622, 624, and 626. The third period 603 follows the second period 602 (e.g., relaxation time), and it includes at least one PWM voltage pulse of the PWM scanning procedure.

In the second embodiment, during the third period 603 of the selection stage (e.g., stage 620), the bright-state voltage curve 624 may exhibit a relatively low voltage amplitude compared to the dark-state voltage curve 622, as shown by FIGS. 6B-2 and 6B-4. Additionally, during the first period 601, the bright-state voltage curve 624 may exhibit a relatively high voltage amplitude compared to the dark-state voltage curve 622, as shown by FIGS. 6B-2 and 6B-4. It should be noted that the voltage amplitudes of the dark-state voltage curve 622 and the bright-state voltage curve 624 within the first period 601 are higher than those within the third period 603.

In view of Cases 1 and 2, during the third period (e.g., period 503 or 603) of the selection stage (e.g., stage 620), the bright-state voltage curve (e.g., curve 534 or 624) may exhibit a relatively low voltage amplitude compared to the dark-state voltage curve (e.g., curve 532 or 622). Additionally, during the first period (e.g., period 501 or 601) of the selection stage, the bright-state voltage curve (e.g., curve 534 or 624) may exhibit a relatively high voltage amplitude compared to the dark-state voltage curve (e.g., curve 532 or 622). It should be noted that the voltage amplitudes of the dark-state voltage curve (e.g., curve 532 or 622) and the bright-state voltage curve (e.g., curve 534 or 624) within the first period (e.g., period 501 or 601) are higher than those within the third period (e.g., period 503 or 603).

### Case 3

FIGS. 7A-1 to 7A-4 are waveform diagrams illustrating the manipulation stage within the SD+ scanning procedure in accordance with the third embodiment of the present disclosure. FIGS. 7B-1 to 7B-4 are waveform diagrams illustrating the speeding stage within the SD+ scanning procedure in accordance with the third embodiment of the present disclosure. FIGS. 7C-1 to 7C-4 are waveform diagrams illustrating the compensation stage within the SD+ scanning procedure in accordance with the third embodiment of the present disclosure.

In the third embodiment, the stages of the pixel circuits on four adjacent scan lines during the SD+ scanning procedure have equal durations and can be arranged in a pipelined manner in the sequence of a manipulation stage (MP), a selection stage (SEL), a compensation stage (CP), and a non-selection stage (NS), as shown in Table 3. Each of the time periods TP1 to TP8 has an equal duration T. The waveforms associated with the manipulation stage (MP), selection stage (SEL), and compensation stage (CP) are denoted as stages 710, 720, and 730, as shown in FIGS. 7A-1 to 7A-4, 7B-1 to 7B-4, and 7C-1 to 7C-4, respectively. It should be noted that the non-selection stage (NS) is not shown in these figures.

**Table 3**

| Scan Line | TP1 | TP2 | TP3 | TP4 | TP5 | TP6 | TP7 | TP8 |
|---|---|---|---|---|---|---|---|---|
| 1 | MP | SEL | CP | NS | NS | NS | NS | NS |
| 2 | NS | MP | SEL | CP | NS | NS | NS | NS |
| 3 | NS | NS | MP | SEL | CP | NS | NS | NS |
| 4 | NS | NS | NS | MP | SEL | CP | NS | NS |

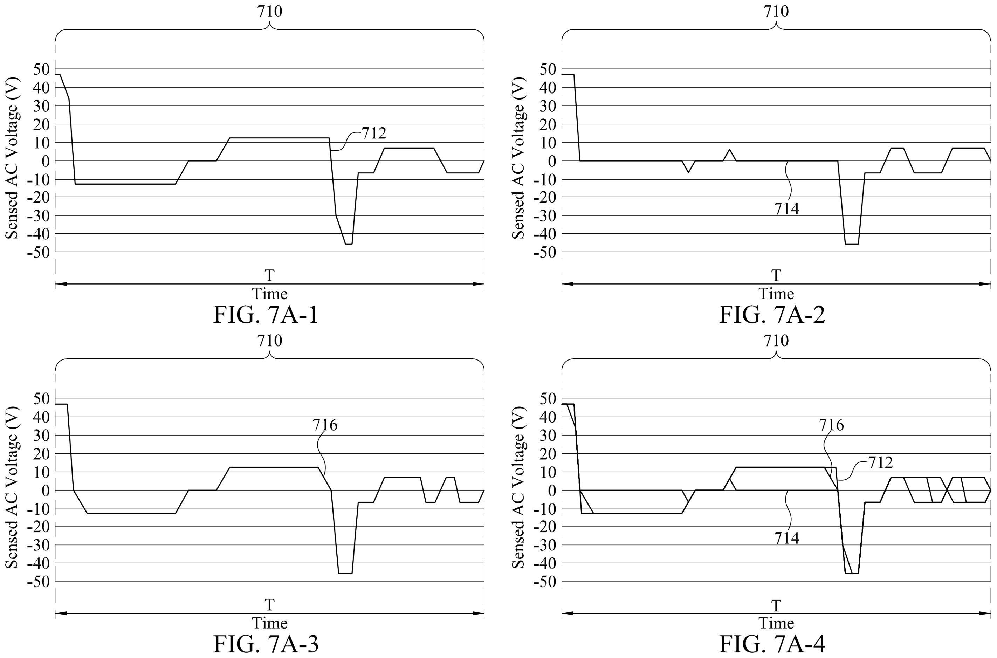

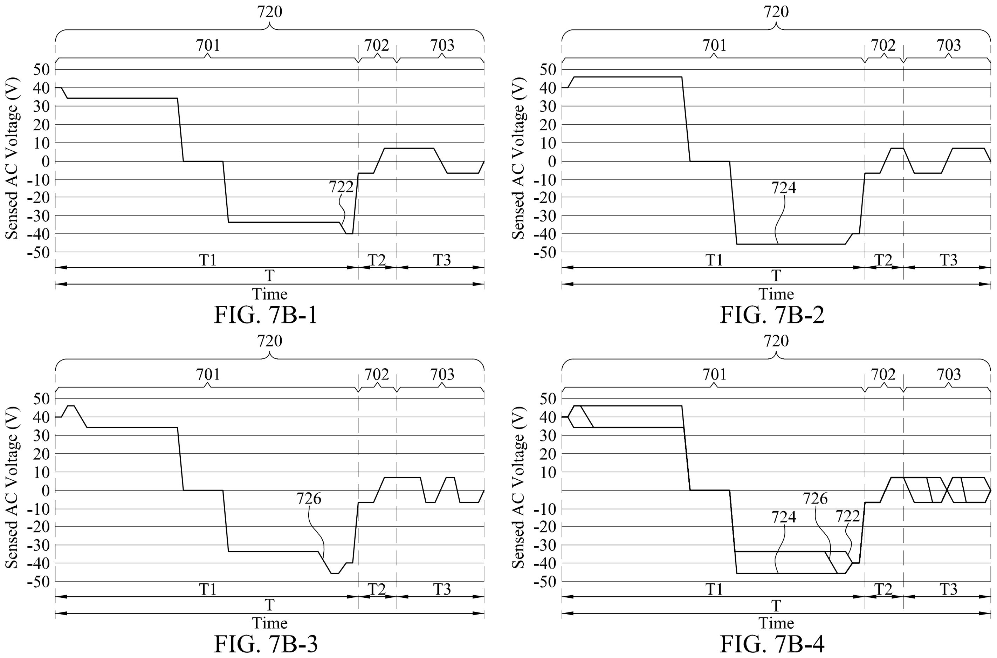

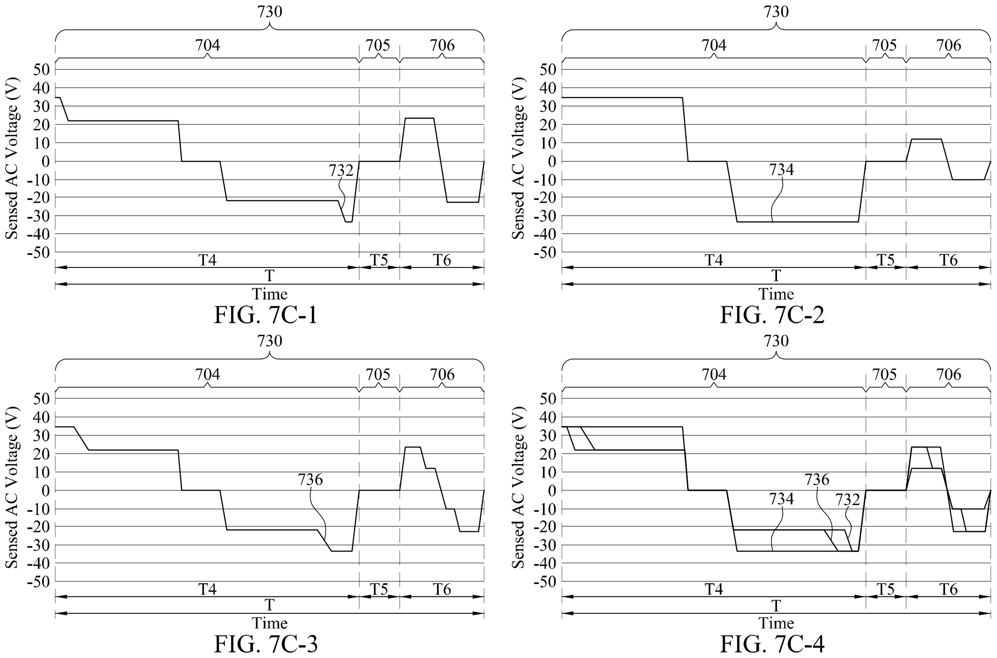

In FIGS. 7A-1 to 7A-3, curves 712, 714, and 716 are regarded as a dark-state voltage, a bright-state voltage, and grayscale voltage applied to a pixel circuit on the activated scanning electrode during the manipulation stage (MP), respectively. Additionally, curves 712, 714, and 716 are collectively shown in FIG. 7A-4. In FIGS. 7B-1 to 7B-3, curves 722, 724, and 726 are regarded as a dark-state voltage, a bright-state voltage, and grayscale voltage applied to a pixel circuit on the activated scanning electrode during the selection stage (SEL), respectively. Additionally, curves 722, 724, and 726 are collectively shown in FIG. 7B-4. In FIGS. 7C-1 to 7C-3, curves 732, 734, and 736 are regarded as a dark-state voltage, a bright-state voltage, and grayscale voltage applied to a pixel circuit on the activated scanning electrode during the compensation stage (CP), respectively. Additionally, curves 732, 734, and 736 are collectively shown in FIG. 7C-4.

Referring to FIGS. 7B-1 to 7B-4, the selection stage (e.g., stage 720) includes a first period 701, a second period 702, and a third period 703 with durations T1, T2, and T3, respectively. The first period 701 may include one or more AC voltage pulses of a specific driving mode, such as the SD+ driving mode. The second period 702 may be a relaxation time during which the sensed voltage of the ChLC molecules of the pixel circuits on the activated scanning electrode is approximately between +6V and -6V for both the dark-state voltage curve 722 and the bright-state voltage curve 724. The third period 703 follows the second period and includes at least one PWM voltage pulse of the PWM scanning procedure. Additionally, the dark-state voltage curve 722 and the bright-state voltage curve 724 within the third period 703 may have substantially equal voltage amplitudes, such as approximately 6V. It should be noted that the voltage amplitudes of the dark-state voltage curve 722 and the bright-state voltage curve 724 within the first period 701 are higher than those within the third period 703.

Referring to FIGS. 7C-1 to 7C-4, the compensation stage (e.g., stage 730) includes a fourth period 704, a fifth period 705, and a sixth period 706 with durations T4, T5, and T6, respectively. Since the stages of the SD+ scanning procedure for the scan lines are arranged in a pipeline manner as shown in Table 3, the durations T4, T5, and T6 within the compensation stage on scan line N correspond to the durations T1, T2, and T3 within the selection stage on scan line N+1, respectively. The fourth period 704 may include one or more AC voltage pulses of a specific driving mode. Additionally, during the fourth period 704, the bright-state voltage curve 734 may exhibit a relatively high voltage amplitude compared to the dark-state voltage curve 732, as shown by FIGS. 7C-1 and 7C-2. The fifth period 705 may be a relaxation time during which the sensed voltage of the ChLC molecules of the pixel circuits on the activated scanning electrode is approximately or substantially equal to 0V for curves 732, 734, and 736. The sixth period 706 follows the fifth period 705 and includes at least one PWM voltage pulse of the PWM scanning procedure. Additionally, during the sixth period 706, the bright-state voltage curve 734 may exhibit a relatively low voltage amplitude compared to the dark-state voltage curve 732 as shown by FIGS. 7C-1 and 7C-2. It should be noted that the voltage amplitudes of the dark-state voltage curve 732 and the bright-state voltage curve 734 within the fourth period 704 are higher than those within the sixth period 706.

### Case 4

FIGS. 8A-1 to 8A-4 are waveform diagrams illustrating the manipulation stage within the SD+ scanning procedure in accordance with the fourth embodiment of the present disclosure. FIGS. 8B-1 to 8B-4 are waveform diagrams illustrating the speeding stage within the SD+ scanning procedure in accordance with the fourth embodiment of the present disclosure. FIGS. 8C-1 to 8C-4 are waveform diagrams illustrating the compensation stage within the SD+ scanning procedure in accordance with the fourth embodiment of the present disclosure.

In the fourth embodiment, the stages of the pixel circuits on four adjacent scan lines during the SD+ scanning procedure have equal durations and can be arranged in a pipelined manner in the sequence of a manipulation stage (MP), a selection stage (SEL), a compensation stage (CP), and a non-selection stage (NS), as shown in Table 3. Each of the time periods TP1 to TP8 has an equal duration T. The waveforms associated with the manipulation stage (MP), selection stage (SEL), and compensation stage (CP) are denoted as stages 810, 820, and 830, as shown in FIGS. 8A-1 to 8A-4, 8B-1 to 8B-4, and 8C-1 to 8C-4, respectively. It should be noted that the non-selection stage (NS) is not shown in these figures.

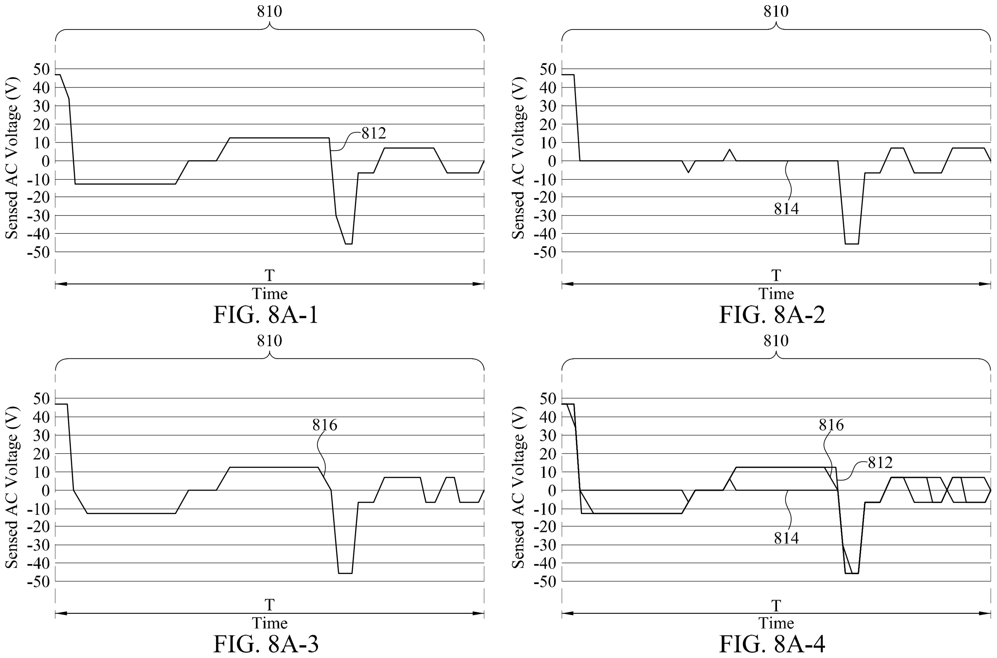

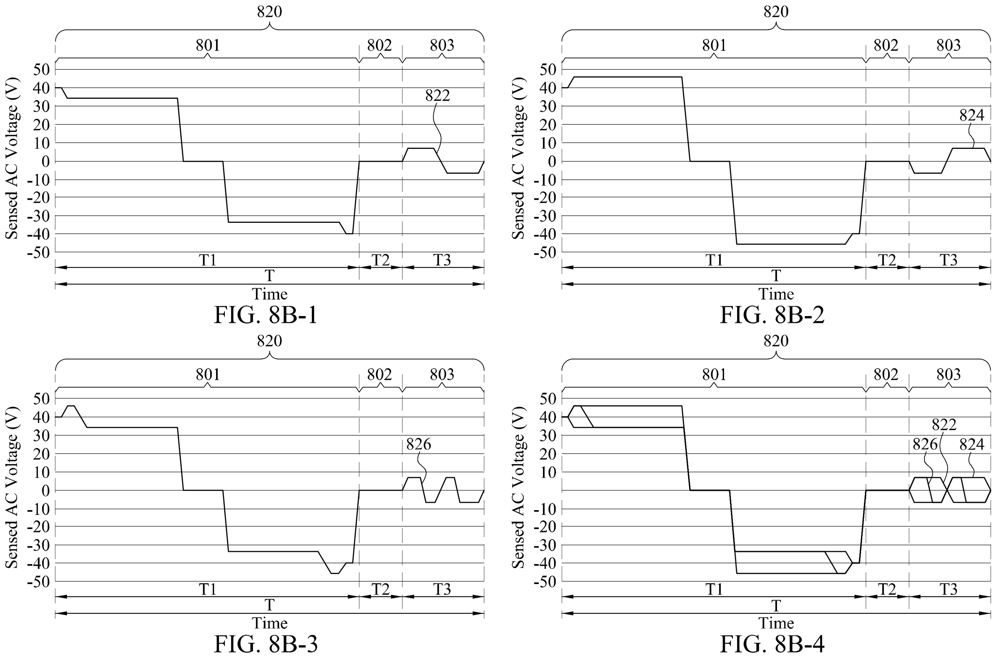

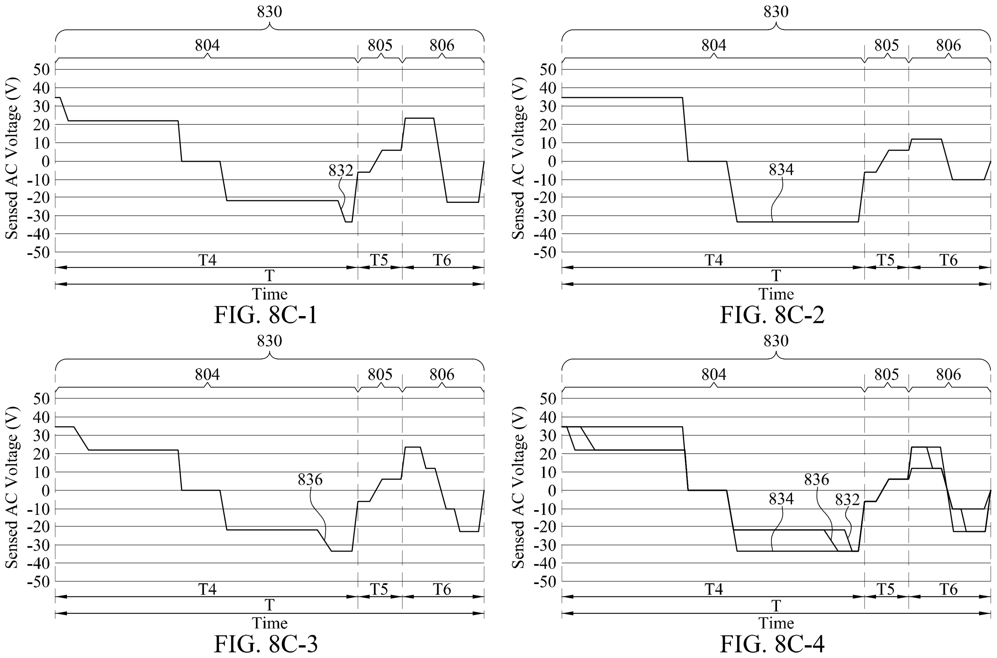

In FIGS. 8A-1 to 8A-3, curves 812, 814, and 816 are regarded as a dark-state voltage, a bright-state voltage, and grayscale voltage applied to a pixel circuit on the activated scanning electrode during the manipulation stage (MP), respectively. Additionally, curves 812, 814, and 816 are collectively shown in FIG. 8A-4. In FIGS. 8B-1 to 8B-3, curves 822, 824, and 826 are regarded as a dark-state voltage, a bright-state voltage, and grayscale voltage applied to a pixel circuit on the activated scanning electrode during the selection stage (SEL), respectively. Additionally, curves 822, 824, and 826 are collectively shown in FIG. 8B-4. In FIGS. 8C-1 to 8C-3, curves 832, 834, and 836 are regarded as a dark-state voltage, a bright-state voltage, and grayscale voltage applied to a pixel circuit on the activated scanning electrode during the compensation stage (CP), respectively. Additionally, curves 832, 834, and 836 are collectively shown in FIG. 8C-4.

Referring to FIGS. 8B-1 to 8B-4, the selection stage (e.g., stage 820) includes a first period 801, a second period 802, and a third period 803 with durations T1, T2, and T3, respectively. The first period 801 may include one or more AC voltage pulses of a specific driving mode, such as the SD+ driving mode. During the first period 801, the bright-state voltage curve 824 exhibits a higher voltage amplitude compared to the dark-state voltage curve 822. The second period 802 may be a relaxation time during which the sensed voltage of the ChLC molecules of the pixel circuits on the activated scanning electrode is approximately or substantially equal to 0V for both the dark-state voltage curve 822 and the bright-state voltage curve 824. The third period 803 follows the second period 802 and includes at least one PWM voltage pulse of the PWM scanning procedure. Additionally, the dark-state voltage curve 822 and the bright-state voltage curve 824 within the third period 803 may have substantially equal voltage amplitudes, such as approximately 6V.

Referring to FIGS. 8C-1 to 8C-4, the compensation stage (e.g., stage 830) includes a fourth period 804, a fifth period 805, and a sixth period 806 with durations T4, T5, and T6, respectively. Since the stages of the SD+ scanning procedure for the scan lines are arranged in a pipeline manner as shown in Table 3, the durations T4, T5, and T6 within the compensation stage on scan line N correspond to the durations T1, T2, and T3 within the selection stage (e.g., stage 820) on scan line N+1, respectively. The fourth period 804 may include one or more AC voltage pulses of a specific driving mode. Additionally, during the fourth period 804, the bright-state voltage curve 834 may exhibit a relatively high voltage amplitude compared to the dark-state voltage curve 832, as shown by in FIGS. 8C-1 and 8C-2. The fifth period 805 may be a relaxation time during which the sensed voltage of the ChLC molecules of the pixel circuits on the activated scanning electrode is approximately between +6V and -6V for both the dark-state voltage curve 832 and the bright-state voltage curve 834. The sixth period 806 follows the fifth period 805 and includes at least one PWM voltage pulse of the PWM scanning procedure. Additionally, during the sixth period 806, the bright-state voltage curve 834 may exhibit a relatively low voltage amplitude compared to the dark-state voltage curve 832, as shown by in FIGS. 8C-1 and 8C-2. It should be noted that the voltage amplitudes of the dark-state voltage curve 832 and the bright-state voltage curve 834 within the fourth period 804 are higher than those within the sixth period 806.

### Case 5

FIGS. 9A-1 to 9A-4 are waveform diagrams illustrating the manipulation stage within the SD+ scanning procedure in accordance with the fifth embodiment of the present disclosure. FIGS. 9B-1 to 9B-4 are waveform diagrams illustrating the speeding stage within the SD+ scanning procedure in accordance with the fifth embodiment of the present disclosure. FIGS. 9C-1 to 9C-4 are waveform diagrams illustrating the compensation stage within the SD+ scanning procedure in accordance with the fifth embodiment of the present disclosure.

In the fifth embodiment, the stages of the pixel circuits on four adjacent scan lines during the SD+ scanning procedure have equal durations and can be arranged in a pipelined manner in the sequence of a manipulation stage (MP), a selection stage (SEL), a compensation stage (CP), and a non-selection stage (NS), as shown in Table 3. Each of the time periods TP1 to TP8 has an equal duration T. The waveforms associated with the manipulation stage (MP), selection stage (SEL), and compensation stage (CP) are denoted as stages 910, 920, and 930, as shown in FIGS. 9A-1 to 9A-4, 9B-1 to 9B-4, and 9C-1 to 9C-4, respectively. It should be noted that the non-selection stage (NS) is not shown in these figures.

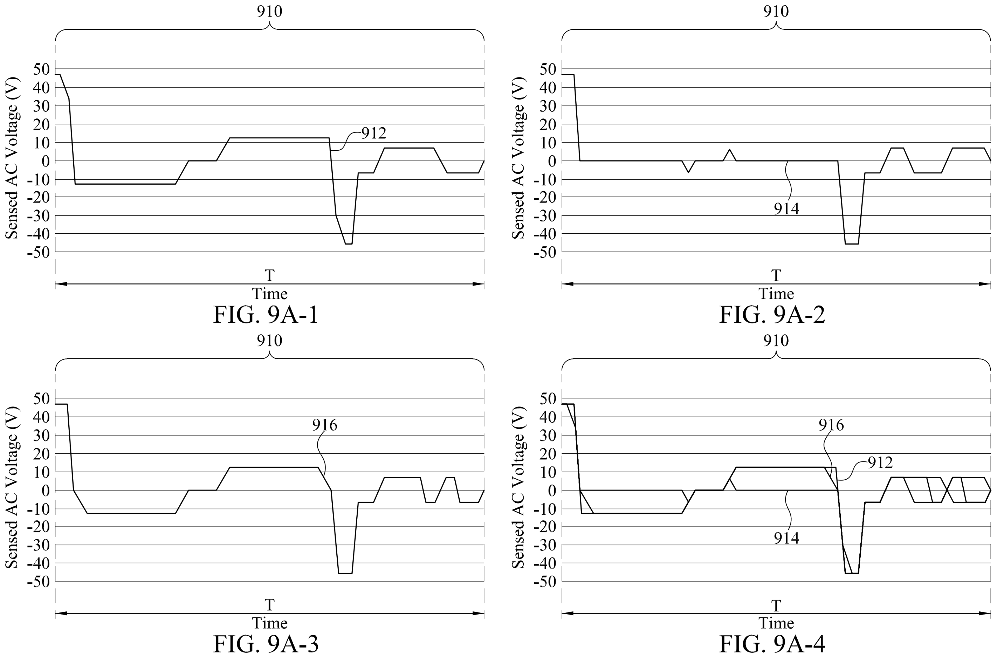

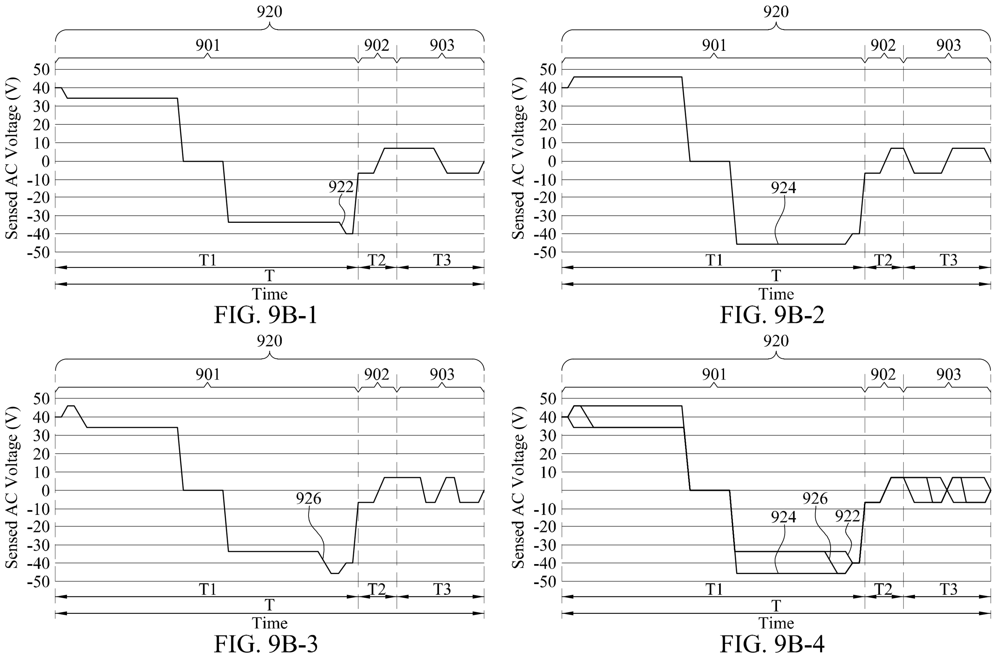

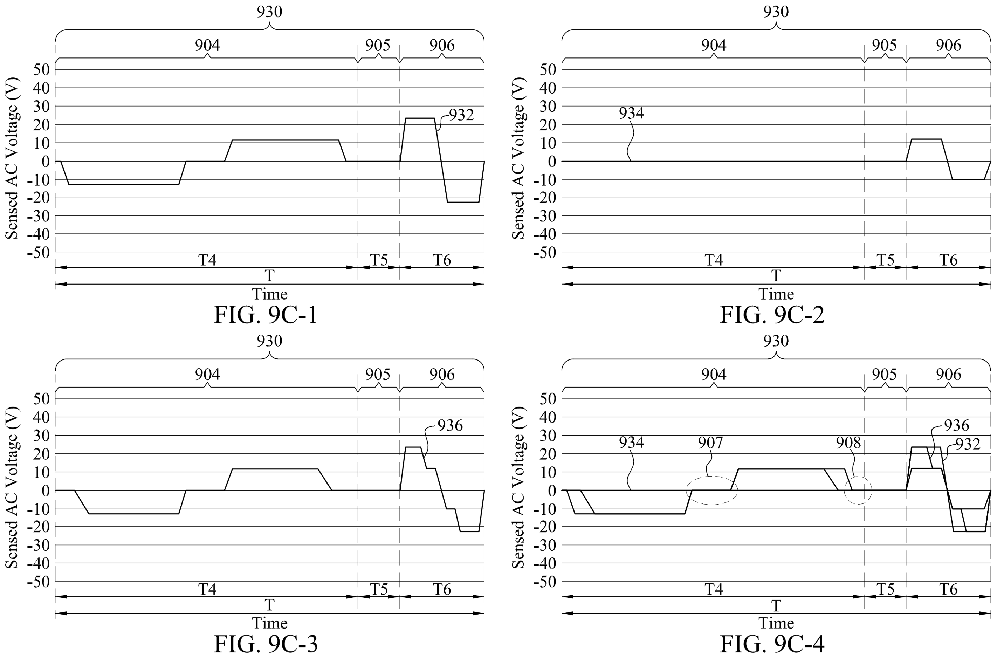

In FIGS. 9A-1 to 9A-3, curves 912, 914, and 916 are regarded as a dark-state voltage, a bright-state voltage, and grayscale voltage applied to a pixel circuit on the activated scanning electrode during the manipulation stage (MP), respectively. Additionally, curves 912, 914, and 916 are collectively shown in FIG. 9A-4. In FIGS. 9B-1 to 9B-3, curves 922, 924, and 926 are regarded as a dark-state voltage, a bright-state voltage, and grayscale voltage applied to a pixel circuit on the activated scanning electrode during the selection stage (SEL), respectively. Additionally, curves 922, 924, and 926 are collectively shown in FIG. 9B-4. In FIGS. 9C-1 to 9C-3, curves 932, 934, and 936 are regarded as a dark-state voltage, a bright-state voltage, and grayscale voltage applied to a pixel circuit on the activated scanning electrode during the compensation stage (CP), respectively. Additionally, curves 932, 934, and 936 are collectively shown in FIG. 9C-4.

Referring to FIGS. 9B-1 to 9B-4, the selection stage (e.g., stage 920) includes a first period 901, a second period 902, and a third period 903 with durations T1, T2, and T3, respectively. The first period 901 may include one or more AC voltage pulses of a specific driving mode, such as the SD+ driving mode. During the first period 901, the bright-state voltage curve 924 exhibits a higher voltage amplitude compared to the dark-state voltage curve 922. The second period 902 may be a relaxation time during which the sensed voltage of the ChLC molecules of the pixel circuits on the activated scanning electrode is approximately between +6V and -6V (e.g., voltage amplitude of 6V) for both the dark-state voltage curve 922 and the bright-state voltage curve 924. The third period 903 follows the second period 902 and includes at least one PWM voltage pulse of the PWM scanning procedure. Additionally, the dark-state voltage curve 922 and the bright-state voltage curve 924 within the third period 903 may have substantially equal voltage amplitudes, such as approximately 6V.

Referring to FIGS. 9C-1 to 9C-4, the compensation stage (e.g., stage 930) includes a fourth period 904, a fifth period 905, and a sixth period 906 with durations T4, T5, and T6, respectively. Since the stages of the SD+ scanning procedure for the scan lines are arranged in a pipeline manner as shown in Table 3, the durations T4, T5, and T6 within the compensation stage on scan line N correspond to the durations T1, T2, and T3 within the selection stage (e.g., stage 920) on scan line N+1, respectively. The compensation stage shown in FIGS. 9C-1 to 9C-4 may incorporate the "isolated stage" in the HCSD+ driving mode. For example, the fourth period 904 may include one or more AC voltage pulses of a specific driving mode. Additionally, during the fourth period 904, the bright-state voltage curve 934 may have a relatively high voltage amplitude compared to the dark-state voltage curve 932, as shown by FIGS. 9C-1 and 9C-2. Additionally, a relaxation time is added to the fourth period 904 after each of the negative half cycle and positive half cycle, as shown by regions 907 and 908 in FIGS. 9C-1 to 9C-4.

The fifth period 905 may be a relaxation time (e.g., duration T5) during which the sensed voltage of the ChLC molecules of the pixel circuits on the activated scanning electrode is approximately or substantially equal to 0V for both the dark-state voltage curve 932 and the bright-state voltage curve 934. The sixth period 906 follows the fifth period and includes at least one PWM voltage pulse of the PWM scanning procedure. Additionally, during the sixth period 906, the bright-state voltage curve 934 may have a relatively low voltage amplitude compared to the dark-state voltage curve 932, as shown by FIGS. 9C-1 and 9C-2.

### Case 6

FIGS. 10A-1 to 10A-4 are waveform diagrams illustrating the manipulation stage within the SD+ scanning procedure in accordance with the sixth embodiment of the present disclosure. FIGS. 10B-1 to 10B-4 are waveform diagrams illustrating the speeding stage within the SD+ scanning procedure in accordance with the sixth embodiment of the present disclosure. FIGS. 10C-1 to 10C-4 are waveform diagrams illustrating the compensation stage within the SD+ scanning procedure in accordance with the sixth embodiment of the present disclosure. FIGS. 10D-1 to 10D-4 are waveform diagrams illustrating the non-selection stage within the SD+ scanning procedure in accordance with the sixth embodiment of the present disclosure.

In the sixth embodiment, the stages of the pixel circuits on four adjacent scan lines during the SD+ scanning procedure have equal durations and can be arranged in a pipelined manner in the sequence of a manipulation stage, a selection stage, a compensation stage, and a non-selection stage, as shown in Table 3. Each of the time periods TP1 to TP8 has an equal duration T. The waveforms associated with the manipulation stage (MP), selection stage (SEL), compensation stage (CP), and non-selection stage (NS) are denoted as stages 1010, 1020, 1030, and 1040, as shown in FIGS. 10A-1 to 10A-4, 10B-1 to 10B-4, 10C-1 to 10C-4, and 10D-1 to 10D-4, respectively.

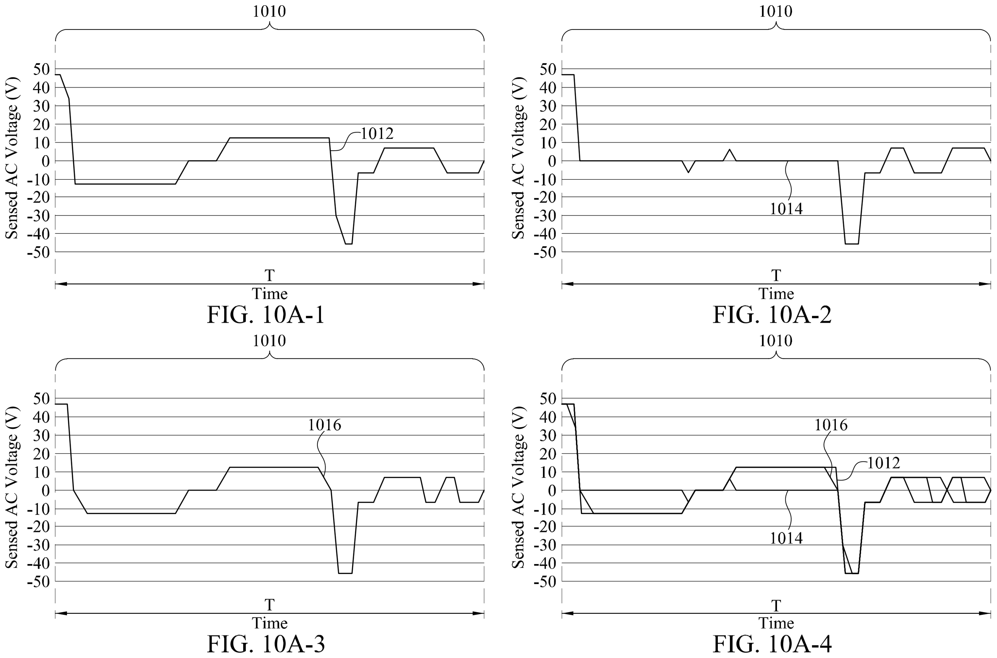

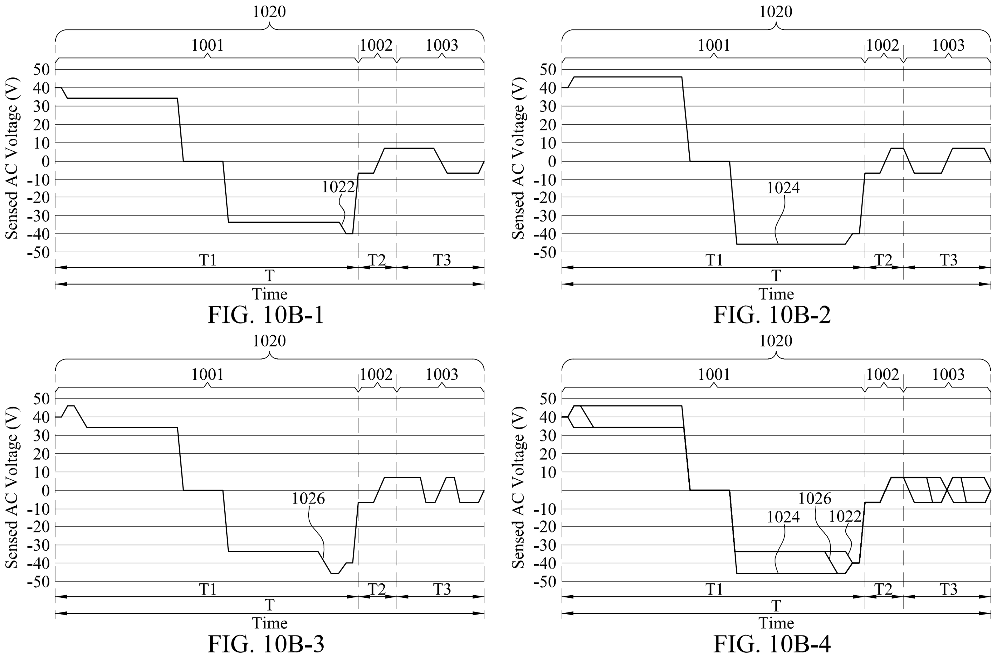

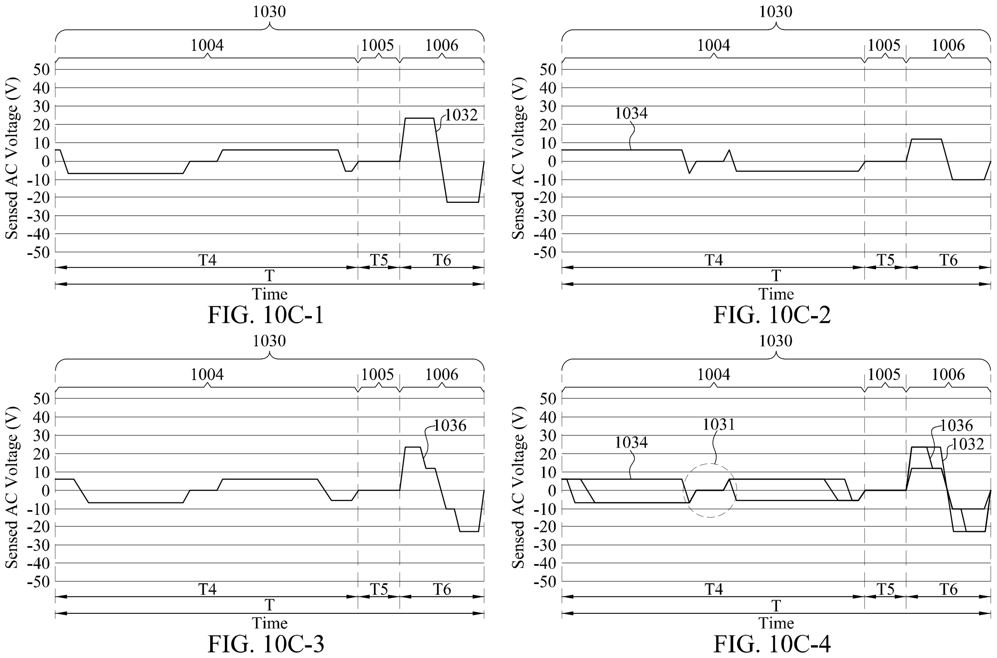

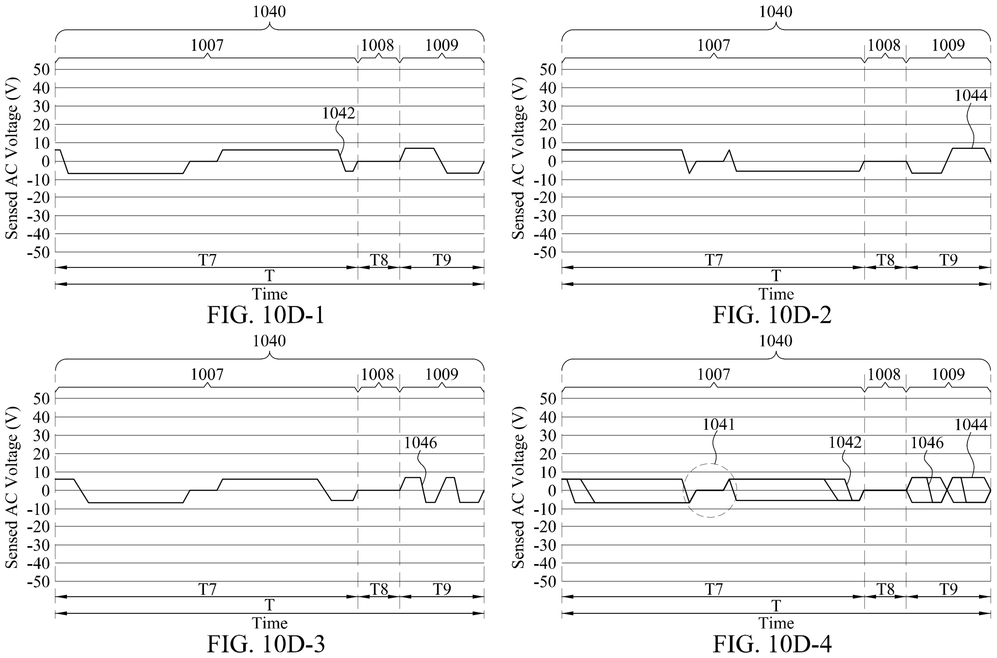

In FIGS. 10A-1 to 10A-3, curves 1012, 1014, and 1016 are regarded as a dark-state voltage, a bright-state voltage, and grayscale voltage applied to a pixel circuit on the activated scanning electrode during the manipulation stage (MP), respectively. Additionally, curves 1012, 1014, and 1016 are collectively shown in FIG. 10A-4. In FIGS. 10B-1 to 10B-3, curves 1022, 1024, and 1026 are regarded as a dark-state voltage, a bright-state voltage, and grayscale voltage applied to a pixel circuit on the activated scanning electrode during the selection stage (SEL), respectively. Additionally, curves 1022, 1024, and 1026 are collectively shown in FIG. 10B-4. In FIGS. 10C-1 to 10C-3, curves 1032, 1034, and 1036 are regarded as a dark-state voltage, a bright-state voltage, and grayscale voltage applied to a pixel circuit on the activated scanning electrode during the compensation stage (CP), respectively. Additionally, curves 1032, 1034, and 1036 are collectively shown in FIG. 10C-4. In FIGS. 10D-1 to 10D-3, curves 1042, 1044, and 1046 are regarded as a dark-state voltage, a bright-state voltage, and grayscale voltage applied to a pixel circuit on the activated scanning electrode during the non-selection stage (NS), respectively. Additionally, curves 1042, 1044, and 1046 are collectively shown in FIG. 10D-4.

Referring to FIGS. 10B-1 to 10B-4, the selection stage (e.g., stage 1020) includes a first period 1001, a second period 1002, and a third period 1003 with durations T1, T2, and T3, respectively. The first period 1001 may include one or more AC voltage pulses of a specific driving mode, such as the SD+ driving mode. During the first period 1001, the bright-state voltage curve 1024 exhibits a higher voltage amplitude compared to the dark-state voltage curve 1022. The second period 1002 may be a relaxation time during which the sensed voltage of the ChLC molecules of the pixel circuits on the activated scanning electrode is approximately between +6V and -6V (e.g., voltage amplitude of 6V) for both the dark-state voltage curve 1022 and the bright-state voltage curve 1024. The third period 1003 follows the second period 1002 and includes at least one PWM voltage pulse of the PWM scanning procedure. Additionally, the dark-state voltage curve 1022 and the bright-state voltage curve 1024 within the third period 1003 may have substantially equal voltage amplitudes, such as approximately 6V.

Referring to FIGS. 10C-1 to 10C-4 and 10D-1 to 10D-4, the compensation stage (e.g., stage 1030) includes a fourth period 1004, a fifth period 1005, and a sixth period 1006 with durations T4, T5, and T6, while the non-selection stage (e.g., stage 1040) includes a seventh period 1007, an eighth period 1008, and a ninth period 1009 with durations T7, T8, and T9, respectively. Since the stages of the SD+ scanning procedure for the scan lines are arranged in a pipeline manner as shown in Table 3, the durations T7, T8, and T9 within the non-selection stage on scan line 1 (or scan line N) at time period TP5 corresponds to the durations T4, T5, and T6 within the compensation stage on scan line 2 (or scan line N+1), and also correspond to the durations T1, T2, and T3 within the selection stage (e.g., stage 1020) on scan line 3 (or scan line N+2), respectively. The fourth period 1004 may include one or more AC voltage pulses of a specific driving mode. Additionally, during the fourth period 1004, the bright-state voltage curve 1034 and the dark-state voltage curve 1032 may have substantially equal voltage amplitudes, as shown by FIGS. 10C-1 and 10C-2. The fifth period 1005 may be a relaxation time (e.g., duration T5) during which the sensed voltage of the ChLC molecules of the pixel circuits on the activated scanning electrode is approximately or substantially equal to 0V for both the dark-state voltage curve 1032 and the bright-state voltage curve 1034. The sixth period 1006 follows the fifth period 1005 and includes at least one PWM voltage pulse of the PWM scanning procedure. Additionally, during the sixth period 1006, the bright-state voltage curve 1034 may have a relatively low voltage amplitude compared to the dark-state voltage curve 1032, as shown by FIGS. 10C-1 and 10C-2.

Furthermore, the fourth period 1004 within the compensation stage (e.g., stage 1030) may include a partial waveform within the non-selection stage (e.g., stage 1040), such as the seventh period 1007. For example, region 1031 refers to a relaxation time between the first half cycle and the second half cycle of the fourth period 1004, and the sensed voltage of the ChLC molecules of the pixel circuits on the activated scanning electrode is approximately or substantially equal to 0V (or approximately between +6V and -6V) for both the dark-state voltage curve 1032 and the bright-state voltage curve 1034. Region 1041 refers to a relaxation time between the first half cycle and the second half cycle of the seventh period 1007, and the relaxation time in region 1041 corresponds to that in region 1031, which has the sensed voltage of approximately or substantially equal to 0V (or approximately between +6V and -6V). Furthermore, the eighth period 1008 is also a relaxation time during which the sensed voltage of the ChLC molecules of the pixel circuits on the activated scanning electrode is approximately or substantially equal to 0V.

### Case 7

FIGS. 11A-1 to 11A-4 are waveform diagrams illustrating the manipulation stage within the SD+ scanning procedure in accordance with the seventh embodiment of the present disclosure. FIGS. 11B-1 to 11B-4 are waveform diagrams illustrating the speeding stage within the SD+ scanning procedure in accordance with the seventh embodiment of the present disclosure. FIGS. 11C-1 to 11C-4 are waveform diagrams illustrating the compensation stage within the SD+ scanning procedure in accordance with the seventh embodiment of the present disclosure. FIGS. 11D-1 to 11D-4 are waveform diagrams illustrating the non-selection stage within the SD+ scanning procedure in accordance with the seventh embodiment of the present disclosure.

In the seventh embodiment, the stages of the pixel circuits on four adjacent scan lines during the SD+ scanning procedure have equal durations and can be arranged in a pipelined manner in the sequence of a manipulation stage, a selection stage, a compensation stage, and a non-selection stage, as shown in Table 3. Each of the time periods TP1 to TP8 has an equal duration T. The waveforms associated with the manipulation stage (MP), selection stage (SEL), compensation stage (CP), and non-selection stage (NS) are denoted as stages 1110, 1120, 1130, and 1140, as shown in FIGS. 11A-1 to 11A-4, 11B-1 to 11B-4, 11C-1 to 11C-4, and 11D-1 to 11D-4, respectively.

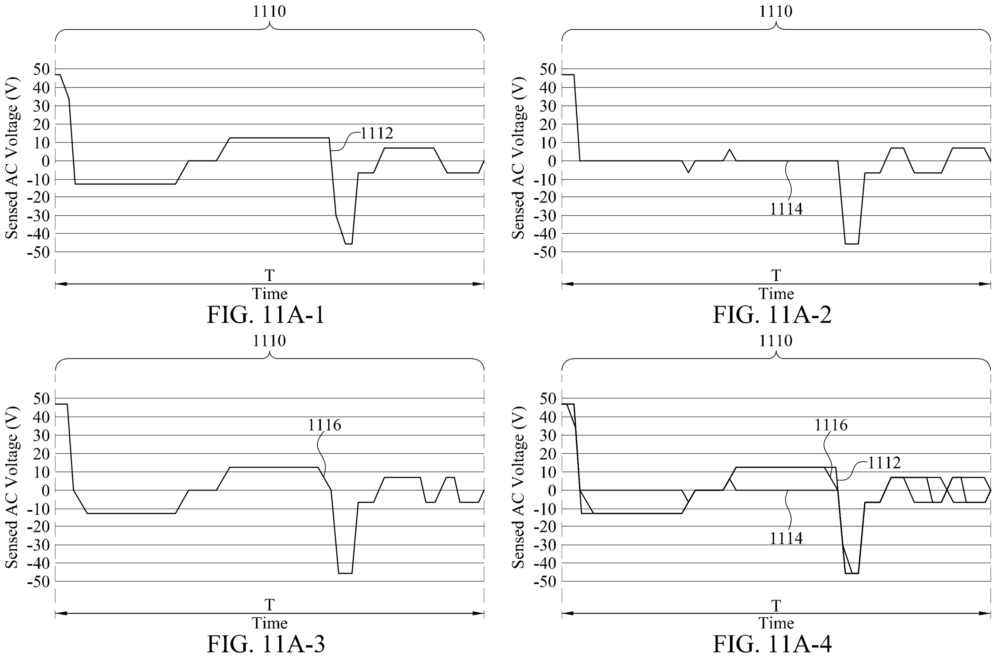

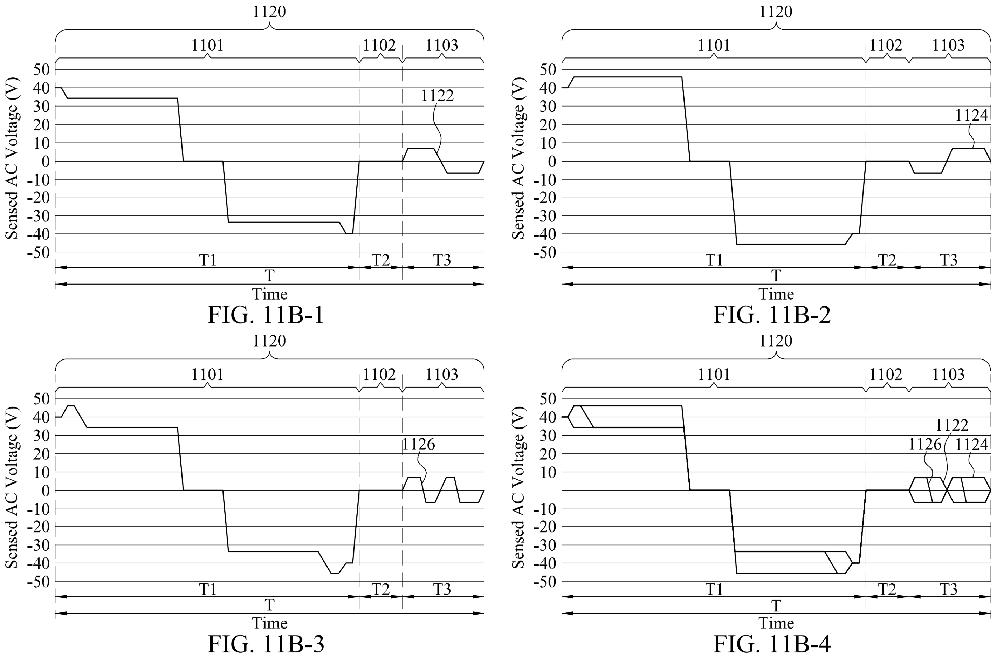

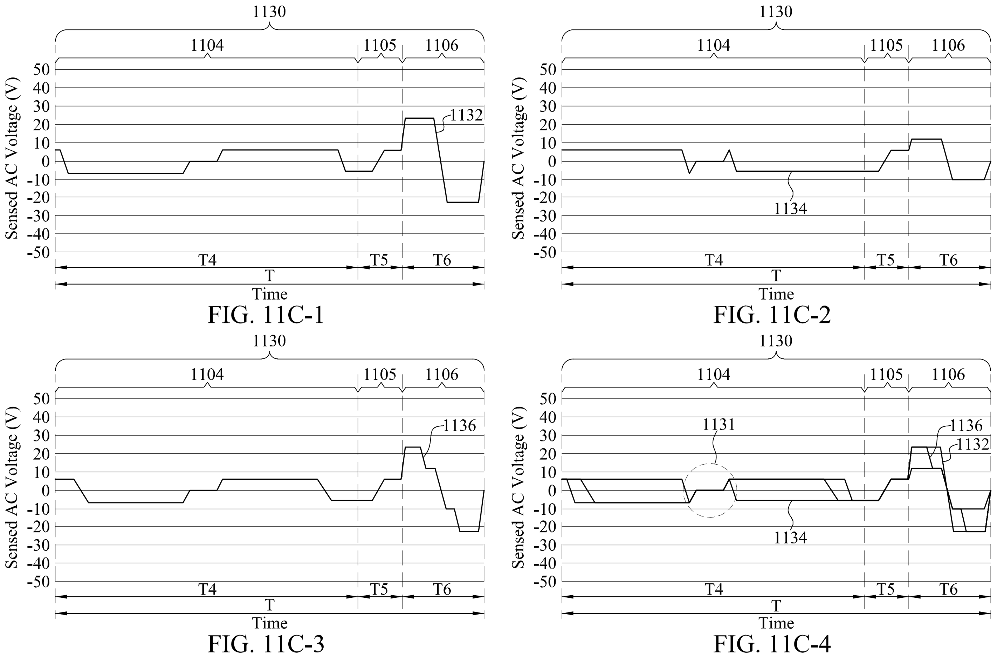

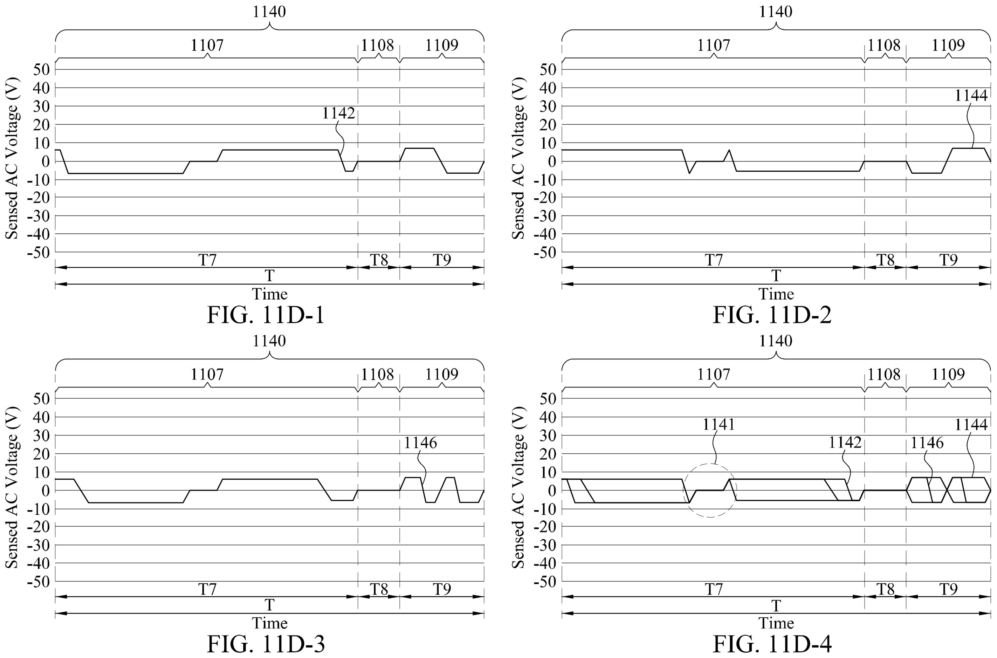

In FIGS. 11A-1 to 11A-3, curves 1112, 1114, and 1116 are regarded as a dark-state voltage, a bright-state voltage, and grayscale voltage applied to a pixel circuit on the activated scanning electrode during the manipulation stage (MP), respectively. Additionally, curves 1112, 1114, and 1116 are collectively shown in FIG. 11A-4. In FIGS. 11B-1 to 11B-3, curves 1122, 1124, and 1126 are regarded as a dark-state voltage, a bright-state voltage, and grayscale voltage applied to a pixel circuit on the activated scanning electrode during the selection stage (SEL), respectively. Additionally, curves 1122, 1124, and 1126 are collectively shown in FIG. 11B-4. In FIGS. 11C-1 to 11C-3, curves 1132, 1134, and 1136 are regarded as a dark-state voltage, a bright-state voltage, and grayscale voltage applied to a pixel circuit on the activated scanning electrode during the compensation stage (CP), respectively. Additionally, curves 1132, 1134, and 1136 are collectively shown in FIG. 11C-4. In FIGS. 11D-1 to 11D-3, curves 1142, 1144, and 1146 are regarded as a dark-state voltage, a bright-state voltage, and grayscale voltage applied to a pixel circuit on the activated scanning electrode during the non-selection stage (NS), respectively. Additionally, curves 1142, 1144, and 1146 are collectively shown in FIG. 11D-4.

Referring to FIGS. 11B-1 to 11B-4, the selection stage (e.g., stage 1120) includes a first period 1101, a second period 1102, and a third period 1103 with durations T1, T2, and T3, respectively. The first period 1101 may include one or more AC voltage pulses of a specific driving mode, such as the SD+ driving mode. During the first period 1101, the bright-state voltage curve 1124 exhibits a higher voltage amplitude compared to the dark-state voltage curve 1122. The second period 1102 may be a relaxation time during which the sensed voltage of the ChLC molecules of the pixel circuits on the activated scanning electrode is approximately or substantially equal to 0V for both the dark-state voltage curve 1122 and the bright-state voltage curve 1124. The third period 1103 follows the second period 1102 and includes at least one PWM voltage pulse of the PWM scanning procedure. Additionally, the dark-state voltage curve 1122 and the bright-state voltage curve 1124 within the third period 1103 may have substantially equal voltage amplitudes, such as approximately 6V.

Referring to FIGS. 11C-1 to 11C-4 and 11D-1 to 11D-4, the compensation stage (e.g., stage 1130) includes a fourth period 1104, a fifth period 1105, and a sixth period 1106 with durations T4, T5, and T6, while the non-selection stage includes a seventh period 1107, an eighth period 1108, and a ninth period 1109 with durations T7, T8, and T9, respectively. Since the stages of the SD+ scanning procedure for the scan lines are arranged in a pipeline manner as shown in Table 3, the durations T7, T8, and T9 within the non-selection stage on scan line 1 (or scan line N) at time period TP5 corresponds to the durations T4, T5, and T6 within the compensation stage on scan line 2 (or scan line N+1), and also correspond to the durations T1, T2, and T3 within the selection stage on scan line 3 (or scan line N+2), respectively. The fourth period 1104 may include one or more AC voltage pulses of a specific driving mode. Additionally, during the fourth period 1104, the bright-state voltage curve 1134 and the dark-state voltage curve 1132 may have substantially equal voltage amplitudes, as shown by FIGS. 11C-1 and 11C-2. The fifth period 1105 may be a relaxation time (e.g., duration T5) during which the sensed voltage of the ChLC molecules of the pixel circuits on the activated scanning electrode is approximately between +6V and -6V (e.g., voltage amplitude of 6V) for both the dark-state voltage curve 1132 and the bright-state voltage curve 1134. The sixth period 1106 follows the fifth period 1105 and includes at least one PWM voltage pulse of the PWM scanning procedure. Additionally, during the sixth period 1106, the bright-state voltage curve 1134 may have a relatively low voltage amplitude compared to the dark-state voltage curve 1132, as shown byFIGS. 11C-1 and 11C-2.

Furthermore, the fourth period 1104 within the compensation stage (e.g., stage 1130) may include a partial waveform within the non-selection stage (e.g., stage 1140), such as the seventh period 1107. For example, region 1131 refers to a relaxation time between the first half cycle and the second half cycle of the fourth period 1104, and the sensed voltage of the ChLC molecules of the pixel circuits on the activated scanning electrode is approximately or substantially equal to 0V (or approximately between +6V and -6V) for both the dark-state voltage curve 1132 and the bright-state voltage curve 1134. Region 1141 refers to a relaxation time between the first half cycle and the second half cycle of the seventh period 1107, and the relaxation time in region 1141 corresponds to that in region 1131, which has the sensed voltage of approximately or substantially equal to 0V. Furthermore, the eighth period 1108 is also a relaxation time during which the sensed voltage of the ChLC molecules of the pixel circuits on the activated scanning electrode is approximately or substantially equal to 0V.

In view of Cases 3 to 7, during the sixth period of the compensation stage following the selection stage, the bright-state voltage curve may have a relatively low voltage amplitude compared to the dark-state voltage curve. Additionally, during the fourth period of the compensation stage, the bright-state voltage curve may exhibit a relatively high voltage amplitude compared to the dark-state voltage curve.

### Case 8

FIGS. 12A-1 to 12A-4 are waveform diagrams illustrating the selection stage within the SD+ scanning procedure in accordance with the eighth embodiment of the present disclosure. FIGS. 12B-1 to 12B-4 are waveform diagrams illustrating the compensation stage within the SD+ scanning procedure in accordance with the eighth embodiment of the present disclosure.

In the eighth embodiment, the stages of the pixel circuits on four adjacent scan lines during the SD+ scanning procedure have equal durations and can be arranged in a pipelined manner in the sequence of a selection stage (SEL), a compensation stage (CP), and a non-selection stage (NS), as shown in Table 4. Each of the time periods TP1 to TP8 has an equal duration T. The waveforms associated with the selection stage (SEL) and compensation stage (CP) are denoted as stages 1210 and 1220, an shown in FIGS. 12A-1 to 12A-4 and 12B-1 to 12B-4, respectively. It should be noted that the non-selection stage (NS) is not shown in these figures.

**Table 4**

| Scan Line | TP1 | TP2 | TP3 | TP4 | TP5 | TP6 | TP7 | TP8 |
|---|---|---|---|---|---|---|---|---|
| 1 | SEL | CP | NS | NS | NS | NS | NS | NS |
| 2 | NS | SEL | CP | NS | NS | NS | NS | NS |
| 3 | NS | NS | SEL | CP | NS | NS | NS | NS |
| 4 | NS | NS | NS | SEL | CP | NS | NS | NS |

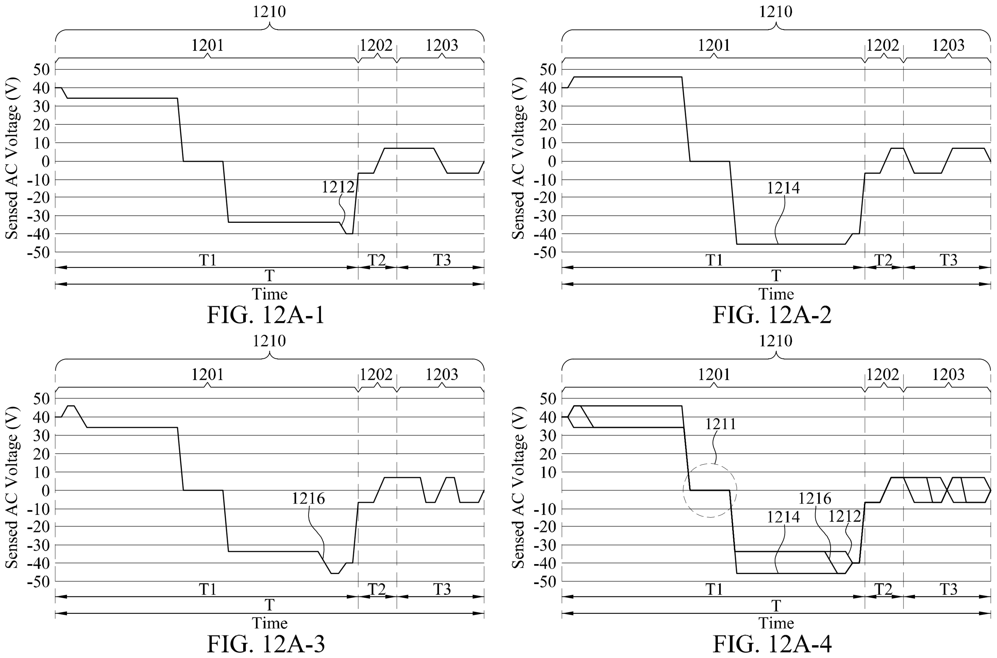

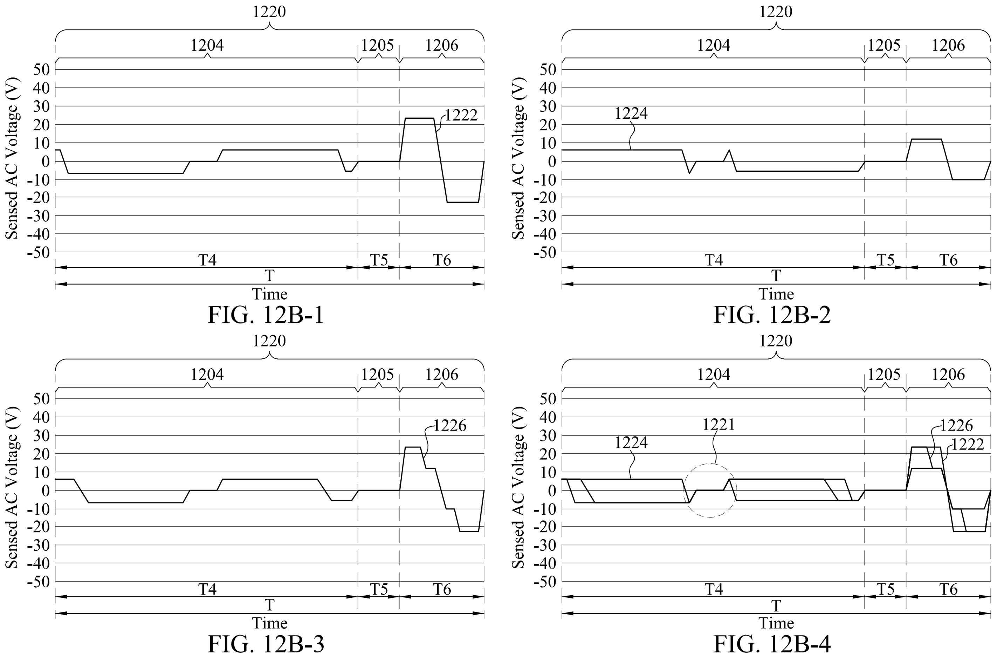

In FIGS. 12A-1 to 12A-3, curves 1212, 1214, and 1216 are regarded as a dark-state voltage, a bright-state voltage, and grayscale voltage applied to a pixel circuit on the activated scanning electrode during the selection stage (SEL), respectively. Additionally, curves 1212, 1214, and 1216 are collectively shown in FIG. 12A-4. In FIGS. 12B-1 to 12B-3, curves 1222, 1224, and 1226 are regarded as a dark-state voltage, a bright-state voltage, and grayscale voltage applied to a pixel circuit on the activated scanning electrode during the compensation stage (CP), respectively. Additionally, curves 1222, 1224, and 1226 are collectively shown in FIG. 12B-4.

Referring to FIGS. 12A-1 to 12A-4, the selection stage (e.g., stage 1210) includes a first period 1201, a second period 1202, and a third period 1203 with durations T1, T2, and T3, respectively. The first period 1201 may include one or more AC voltage pulses of a specific driving mode, such as the SD+ driving mode. During the first period 1201, the bright-state voltage curve 1214 exhibits a higher voltage amplitude compared to the dark-state voltage curve 1212. The second period 1202 may be a relaxation time during which the sensed voltage of the ChLC molecules of the pixel circuits on the activated scanning electrode is approximately between +6V and -6V (e.g., voltage amplitude of 6V) for both the dark-state voltage curve 1212 and the bright-state voltage curve 1214. The third period 1203 follows the second period 1202 and includes at least one PWM voltage pulse of the PWM scanning procedure. Additionally, the dark-state voltage curve 1212 and the bright-state voltage curve 1214 within the third period 1203 may have substantially equal voltage amplitudes, such as approximately 6V.

Referring to FIGS. 12B-1 to 12B-4, the compensation stage (e.g., stage 1220) includes a fourth period 1204, a fifth period 1205, and a sixth period 1206 with durations T4, T5, and T6. Since the stages of the SD+ scanning procedure for the scan lines are arranged in a pipeline manner as shown in Table 4, the durations T4, T5, and T6 within the compensation stage on scan line 1 (or scan line N) correspond to the durations T1, T2, and T3 within the selection stage on scan line 2 (or scan line N+1), respectively. The fourth period 1204 may include one or more AC voltage pulses of a specific driving mode. Additionally, during the fourth period 1204, the bright-state voltage curve 1224 and the dark-state voltage curve 1222 may have substantially equal voltage amplitudes, as shown by FIGS. 12B-1 and 12B-2. The fifth period 1205 may be a relaxation time (e.g., duration T5) during which the sensed voltage of the ChLC molecules of the pixel circuits on the activated scanning electrode is approximately or substantially equal to 0V for both the dark-state voltage curve 1222 and the bright-state voltage curve 1224. The sixth period 1206 follows the fifth period 1205 and includes at least one PWM voltage pulse of the PWM scanning procedure. Additionally, during the sixth period 1206, the bright-state voltage curve 1224 may have a relatively low voltage amplitude compared to the dark-state voltage curve 1222, as shown by FIGS. 12B-1 and 12B-2.

Furthermore, the first period 1201 within the selection stage (e.g., stage 1210) and the fourth period 1204 within the compensation stage (e.g., stage 1220) may include a partial waveform within the non-selection stage. For example, region 1211 refers to a relaxation time between the first half cycle and the second half cycle of the first period 1201, and the sensed voltage of the ChLC molecules of the pixel circuits on the activated scanning electrode is approximately or substantially equal to 0V for both the dark-state voltage curve 1212 and the bright-state voltage curve 1214. Region 1221 refers to a relaxation time between the first half cycle and the second half cycle of the fourth period 1204, and the relaxation time in region 1221 corresponds to that in region 1211, which has the sensed voltage of approximately or substantially equal to 0V.

### Case 9

FIGS. 13A-1 to 13A-4 are waveform diagrams illustrating the selection stage within the SD+ scanning procedure in accordance with the ninth embodiment of the present disclosure. FIGS. 13B-1 to 13B-4 are waveform diagrams illustrating the compensation stage within the SD+ scanning procedure in accordance with the ninth embodiment of the present disclosure.

In the ninth embodiment, the stages of the pixel circuits on four adjacent scan lines during the SD+ scanning procedure have equal durations and can be arranged in a pipelined manner in the sequence of a selection stage, a compensation stage, and a non-selection stage, as shown in Table 4. Each of the time periods TP1 to TP8 has an equal duration T. The waveforms associated with the selection stage (SEL) and compensation stage (CP) are denoted as stages 1310 and 1320, an shown in FIGS. 13A-1 to 13A-4 and 13B-1 to 13B-4, respectively. It should be noted that the non-selection stage (NS) is not shown in these figures.

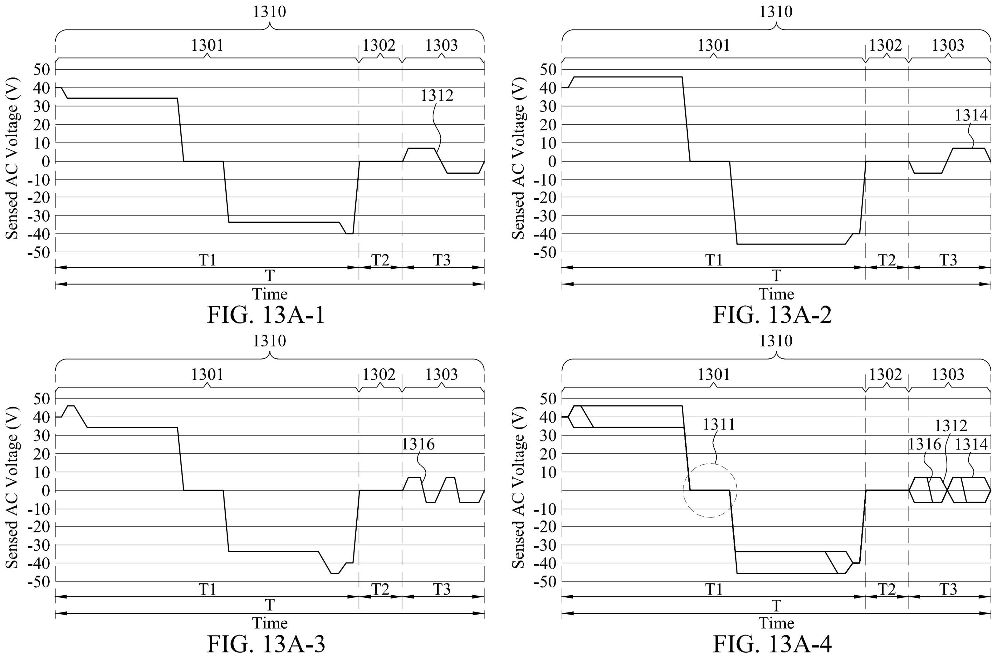

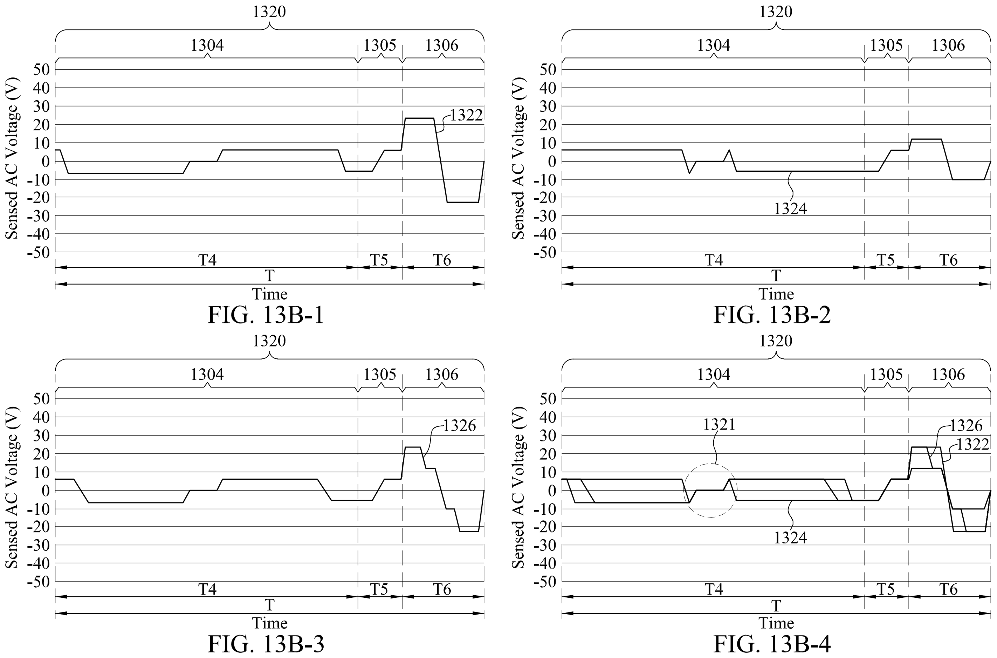

In FIGS. 13A-1 to 13A-4, curves 1312, 1314, and 1316 are regarded as a dark-state voltage, a bright-state voltage, and grayscale voltage applied to a pixel circuit on the activated scanning electrode during the selection stage (SEL), respectively. Additionally, curves 1312, 1314, and 1316 are collectively shown in FIG. 13A-4. In FIGS. 13B-1 to 13B-3, curves 1322, 1324, and 1326 are regarded as a dark-state voltage, a bright-state voltage, and grayscale voltage applied to a pixel circuit on the activated scanning electrode during the compensation stage (CP), respectively. Additionally, curves 1322, 1324, and 1326 are collectively shown in FIG. 13B-4.

Referring to FIGS. 13A-1 to 13A-4, the selection stage (e.g., stage 1310) includes a first period 1301, a second period 1302, and a third period 1303 with durations T1, T2, and T3, respectively. The first period 1301 may include one or more AC voltage pulses of a specific driving mode, such as the SD+ driving mode. During the first period 1301, the bright-state voltage curve 1314 exhibits a higher voltage amplitude compared to the dark-state voltage curve 1312. The second period 1302 may be a relaxation time during which the sensed voltage of the ChLC molecules of the pixel circuits on the activated scanning electrode is 0V (or approximately between +6V and -6V) for both the dark-state voltage curve 1312 and the bright-state voltage curve 1314. The third period 1303 follows the second period and includes at least one PWM voltage pulse of the PWM scanning procedure. Additionally, the dark-state voltage curve 1312 and the bright-state voltage curve 1314 within the third period 1303 may have substantially equal voltage amplitudes, such as approximately 6V.

Referring to FIG. 13B-1 to 13B-4, the compensation stage (e.g., stage 1320) includes a fourth period 1304, a fifth period 1305, and a sixth period 1306 with durations T4, T5, and T6. Since the stages of the SD+ scanning procedure for the scan lines are arranged in a pipeline manner as shown in Table 4, the durations T4, T5, and T6 within the compensation stage on scan line 1 (or scan line N) correspond to the durations T1, T2, and T3 within the selection stage on scan line 2 (or scan line N+1), respectively. The fourth period 1304 may include one or more AC voltage pulses of a specific driving mode. Additionally, during the fourth period 1304, the bright-state voltage curve 1324 and the dark-state voltage curve 1322 may have substantially equal voltage amplitudes, as shown by FIGS. 13B-1 and 13B-2. The fifth period 1305 may be a relaxation time during which the sensed voltage of the ChLC molecules of the pixel circuits on the activated scanning electrode is approximately between +6V and -6V for both the dark-state voltage curve 1322 and the bright-state voltage curve 1324. The sixth period 1306 follows the fifth period 1305 and includes at least one PWM voltage pulse of the PWM scanning procedure. Additionally, during the sixth period 1306, the bright-state voltage curve 1324 may have a relatively low voltage amplitude compared to the dark-state voltage curve 1322, as shown by FIGS. 13B-1 and 13B-2.

Furthermore, the first period 1301 within the selection stage (e.g., stage 1310) and the fourth period 1304 within the compensation stage (e.g., stage 1320) may include a partial waveform within the non-selection stage. For example, region 1311 refers to a relaxation time between the first half cycle and the second half cycle of the first period 1301, and the sensed voltage of the ChLC molecules of the pixel circuits on the activated scanning electrode is approximately or substantially equal to 0V (or between +6V and -6V) for both the dark-state voltage curve 1312 and the bright-state voltage curve 1314. Region 1321 refers to a relaxation time between the first half cycle and the second half cycle of the fourth period 1304, and the relaxation time in region 1321 corresponds to that in region 1311, which has the sensed voltage of approximately or substantially equal to 0V (or between +6V and -6V).

In view of Cases 8 and 9, during the sixth period 1306 of the compensation stage following the selection stage, the bright-state voltage curve 1324 may have a relatively low voltage amplitude compared to the dark-state voltage curve 1322. Additionally, a relaxation time may exist between the first half cycle and the second half cycle of the selection stage or the compensation stage during which the sensed voltage of the ChLC molecules of the pixel circuits on the activated scanning electrode is approximately or substantially equal to 0V. Alternatively, the sensed voltage of the ChLC molecules of the pixel circuits on the activated scanning electrode may be between +6V and -6V to achieve a better image quality of higher contrast and color saturation with lower mura.

In view of the above, by using any of the methods described in the first to ninth embodiments with reference to FIGS. 5 to 13, the display image rendered by the ChLC display device can achieve high contrast and high color saturation with reduced mura. For example, FIG. 15A illustrates an output image 1500 rendered by the display panel 22 with only the S+PWM (or SD+) technique (i.e., the method described in any of the first to ninth embodiments is not used), while FIG. 15B illustrates an output image 1510 rendered by the display panel 22 using the S+PWM (or SD+, HCSD+) technique with the method described in any of the first to ninth embodiments. As can be seen from FIGS. 15A and 15B, the image 1510 in FIG. 15B exhibits higher contrast and lower mura compared to image 1500 in FIG. 15A.

FIG. 16 is a flowchart of a scan driving method of a cholesteric liquid-crystal display device in accordance with some embodiments of the present disclosure. Method 1600 includes steps 1610 and 1620. Please refer to FIG. 1 and FIG. 16 collectively.

Step 1610: utilizing the driving circuit section to perform a specific scanning procedure to activate the scanning lines in sequence, wherein the specific scanning procedure for each activated scanning line comprises at least a first stage comprising a first period, a second period, and a third period arranged in sequence. In some embodiments, the specific scanning procedure may be the SD+, HCSD+, PWM, or S+PWM scanning procedure. In some embodiments, the first stage may refer to the selection stage in any of Cases 1 and 2. In some embodiments, the first stage may refer to the compensation stage in any of Cases 3 to 9.

Step 1620: during the third period of the first stage, utilizing the driving circuit section to apply the bright-state voltage curve and the dark-state voltage curve on the pixel circuits on a first activated scanning line using a first voltage amplitude and a second voltage amplitude, respectively. Additionally, the first voltage amplitude is lower than the second voltage amplitude. In some embodiments, during the third period of the selection stage in any of Cases 1 and 2 or the compensation stage in any of Cases 3 to 9, the bright-state voltage curve has a lower voltage amplitude than the dark-state voltage curve. In some embodiments, during the third period of the selection stage in any of Cases 1 and 2 or the compensation stage in any of Cases 3 to 9, the bright-state voltage curve has a higher voltage amplitude than the dark-state voltage curve.

While the present disclosure has been described with reference to specific embodiments, it is evident that many alternatives, modifications, and variations may be apparent to those skilled in the art. For example, various components of the embodiments may be interchanged, added, or substituted in other embodiments. Also, all of the elements of each figure are not necessary for operation of the disclosed embodiments. For example, one of ordinary skill in the art of the disclosed embodiments would be able to make and use the teachings of the present disclosure by simply employing the elements of the independent claims. Accordingly, embodiments of the present disclosure as set forth herein are intended to be illustrative, not limiting. Various changes may be made without departing from the spirit and scope of the present disclosure.

Even though numerous characteristics and advantages of the present disclosure have been set forth in the foregoing description, together with details of the structure and function of the invention, the disclosure is illustrative only. Changes may be made to details, especially in matters of shape, size, and arrangement of parts, within the principles of the invention to the full extent indicated by the broad general meaning of the terms in which the appended claims are expressed.

## Claims

1. A cholesteric liquid-crystal (ChLC) display device, comprising:
a cholesteric liquid-crystal display panel, comprising a plurality of scanning lines, each comprising a plurality of pixel circuits; and
a driving circuit section, configured to perform a specific scanning procedure to activate the scanning lines in sequence, wherein the specific scanning procedure for each activated scanning line comprises at least a first stage having a first period, a second period, and a third period arranged in sequence;
wherein, during the third period of the first stage, the bright-state voltage curve and the dark-state voltage curve for the pixel circuits on a first activated scanning line have a first voltage amplitude and a second voltage amplitude, respectively,
wherein the first voltage amplitude is lower than the second voltage amplitude.

2. The cholesteric liquid-crystal display device of Claim 1, wherein:
during the first period of the first stage, the bright-state voltage curve and the dark-state voltage curve for the pixel circuits on the first activated scanning line have a third voltage amplitude and a fourth voltage amplitude, respectively;
the third voltage amplitude is higher than the fourth voltage amplitude;
both the third voltage amplitude and the fourth voltage amplitude are higher than the first voltage amplitude and the second voltage amplitude.

3. The cholesteric liquid-crystal display device in any of Claims 1 to 2, wherein the first stage is configured to writing pixel values to the pixel circuit on the first activated scanning line.

4. The cholesteric liquid-crystal display device in any of Claims 1 to 3, wherein during the second period of the first stage, a sensed voltage of ChLC molecules of the pixel circuits on the first activated scanning line is substantially equal to 0V.

5. The cholesteric liquid-crystal display device in any of Claims 1 to 4, wherein:
the specific scanning procedure further comprises a second stage preceding to the first stage;
the second stage is configured to writing pixel values to the pixel circuits on the first activated scanning line; and
the first stage is configured to compensate pixel values written to pixel circuits by the second stage in the specific scanning procedure of a second activated scanning line subsequent to the first activated scanning line.

6. The cholesteric liquid-crystal display device in any of Claims 1 to 5, wherein:
during the second period of the first stage, a sensed voltage of ChLC molecules of ChLC molecules of the pixel circuits on the first activated scanning line is substantially equal to 0V;
the second stage comprises a fourth period, a fifth period, and a sixth period arranged in sequence;
during the fourth period of the second stage, a voltage amplitude of the bright-state voltage curve is higher than that of the dark-state voltage curve;
during the fifth period of the second stage, the sensed voltage of the ChLC molecules of the pixel circuits on the first activated scanning line is within a predetermined voltage amplitude; and
during the sixth period of the second stage, the voltage amplitude of the bright-state voltage curve is substantially equal to that of the dark-state voltage curve.

7. The cholesteric liquid-crystal display device in any of Claims 1 to 5, wherein:
during the second period of the first stage, a sensed voltage of ChLC molecules of the pixel circuits on the first activated scanning line is within a predetermined voltage amplitude;
the second stage comprises a fourth period, a fifth period, and a sixth period arranged in sequence;
during the fourth period of the second stage, a voltage amplitude of the bright-state voltage curve is higher than that of the dark-state voltage curve;
during the fifth period of the second stage, the sensed voltage of the ChLC molecules of the pixel circuits on the first activated scanning line is substantially equal to 0V; and
during the sixth period of the second stage, the voltage amplitude of the bright-state voltage curve is substantially equal to that of the dark-state voltage curve.

8. The cholesteric liquid-crystal display device in any of Claims 1 to 5, wherein:
during the second period of the first stage, a sensed voltage of ChLC molecules of the pixel circuits on the first activated scanning line is substantially equal to 0V;
during the first period of the first stage, the first voltage amplitude of the bright-state voltage curve is substantially equal to 0V;
the first period of the first stage comprises a negative half cycle, a first relaxation time, a positive half cycle, and a second relaxation time arranged in sequence;
the sensed voltage of the ChLC molecules of the pixel circuits on the first activated scanning line is substantially equal to 0V during the first relaxation time and the second relaxation time;
the second stage comprises a fourth period, a fifth period, and a sixth period arranged in sequence;
during the fourth period of the second stage, a voltage amplitude of the bright-state voltage curve is higher than that of the dark-state voltage curve;
during the fifth period of the second stage, the sensed voltage of the ChLC molecules of the pixel circuits on the first activated scanning line is within a predetermined voltage amplitude; and
during the sixth period of the second stage, the voltage amplitude of the bright-state voltage curve is substantially equal to that of the dark-state voltage curve.

9. The cholesteric liquid-crystal display device in any of Claims 1 to 5, wherein:
during the second period of the first stage, a sensed voltage of ChLC molecules of the pixel circuits on the first activated scanning line is substantially equal to 0V;
the first period of the first stage comprises a first half cycle, a relaxation time, and a second half cycle arranged in sequence;
the sensed voltage of the ChLC molecules of the pixel circuits on the first activated scanning line is substantially equal to 0V or within a predetermined voltage amplitude during the relaxation time;
the second stage comprises a fourth period, a fifth period, and a sixth period arranged in sequence;
during the fourth period of the second stage, a voltage amplitude of the bright-state voltage curve is higher than that of the dark-state voltage curve;
during the fifth period of the second stage, the sensed voltage of the ChLC molecules of the pixel circuits on the first activated scanning line is within the predetermined voltage amplitude; and
during the sixth period of the second stage, the voltage amplitude of the bright-state voltage curve is substantially equal to that of the dark-state voltage curve.

10. The cholesteric liquid-crystal display device of Claim 9, wherein:
the specific scanning procedure further comprises a third stage subsequent to the first stage;
the third stage comprises a seventh period, an eighth period, and a ninth period arranged in sequence;
a waveform in the seventh period of the third stage is substantially equal to that in the first period of the first stage;
during the eighth period of the third stage, the sensed voltage of ChLC molecules of the pixel circuits on the first activated scanning line is substantially equal to 0V; and
during the ninth period of the third stage, the sensed voltage of the ChLC molecules of the pixel circuits on the first activated scanning line is within the predetermined voltage amplitude.

11. The cholesteric liquid-crystal display device in any of Claims 1 to 5, wherein:
during the second period of the first stage, a sensed voltage of ChLC molecules of the pixel circuits on the first activated scanning line is within a predetermined voltage amplitude;
the first period of the first stage comprises a first half cycle, a relaxation time, and a second half cycle arranged in sequence;
the sensed voltage of ChLC molecules of the pixel circuits on the first activated scanning line is substantially equal to 0V during the relaxation time;
the second stage comprises a fourth period, a fifth period, and a sixth period arranged in sequence;
during the fourth period of the second stage, a voltage amplitude of the bright-state voltage curve is higher than that of the dark-state voltage curve;
during the fifth period of the second stage, the sensed voltage of the ChLC molecules of the pixel circuits on the first activated scanning line is substantially equal to 0V; and
during the sixth period of the second stage, the voltage amplitude of the bright-state voltage curve is substantially equal to that of the dark-state voltage curve.

12. The cholesteric liquid-crystal display device of Claim 11, wherein:
the specific scanning procedure further comprises a third stage subsequent to the first stage;
the third stage comprises a seventh period, an eighth period, and a ninth period arranged in sequence;
a waveform in the seventh period of the third stage is substantially equal to that in the first period of the first stage;
during the eighth period of the third stage, the sensed voltage of the ChLC molecules of the pixel circuits on the first activated scanning line is substantially equal to 0V; and
during the ninth period of the third stage, the sensed voltage of ChLC molecules of the pixel circuits on the first activated scanning line is within the predetermined voltage amplitude.

13. The cholesteric liquid-crystal display device in any of Claims 1 to 5, wherein:
during the second period of the first stage, a sensed voltage of ChLC molecules of the pixel circuits on the first activated scanning line is substantially equal to 0V;
the first period of the first stage comprises a first half cycle, a first relaxation time, and a second half cycle arranged in sequence;
the sensed voltage of the ChLC molecules of the pixel circuits on the first activated scanning line is substantially equal to 0V during the first relaxation time;
the second stage comprises a fourth period, a fifth period, and a sixth period arranged in sequence;
the fourth period of the second stage comprises a third half cycle, a second relaxation time, and a fourth half cycle;
the sensed voltage of the ChLC molecules of the pixel circuits on the first activated scanning line is substantially equal to 0V during the second relaxation time;
during the fifth period of the second stage, the sensed voltage of the ChLC molecules of the pixel circuits on the first activated scanning line within a predetermined voltage amplitude; and
during the sixth period of the second stage, the voltage amplitude of the bright-state voltage curve is substantially equal to that of the dark-state voltage curve.

14. The cholesteric liquid-crystal display device in any of Claims 1 to 5, wherein:
during the second period of the first stage, a sensed voltage of ChLC molecules of the pixel circuits on the first activated scanning line is within a predetermined voltage amplitude;
the first period of the first stage comprises a first half cycle, a first relaxation time, and a second half cycle arranged in sequence;
the sensed voltage of the ChLC molecules of the pixel circuits on the first activated scanning line is substantially equal to 0V during the first relaxation time;
the second stage comprises a fourth period, a fifth period, and a sixth period arranged in sequence;
the fourth period of the second stage comprises a third half cycle, a second relaxation time, and a fourth half cycle;
the sensed voltage of the ChLC molecules of the pixel circuits on the first activated scanning line is substantially equal to 0V during the second relaxation time;
during the fifth period of the second stage, the sensed voltage of the ChLC molecules of the pixel circuits on the first activated scanning line within the predetermined voltage amplitude; and
during the sixth period of the second stage, the voltage amplitude of the bright-state voltage curve is substantially equal to that of the dark-state voltage curve.

15. A scan driving method of a cholesteric liquid-crystal (ChLC) display device, wherein the ChLC display device comprises a ChLC display panel and a driving circuit section, and the ChLC display panel comprises a plurality of scanning lines each having a plurality of pixel circuits, the method comprising:
utilizing the driving circuit section to perform a specific scanning procedure to activate the scanning lines in sequence, wherein the specific scanning procedure for each activated scanning line comprises at least a first stage having a first period, a second period, and a third period arranged in sequence; and
during the third period of the first stage, utilizing the driving circuit section to apply the bright-state voltage curve and the dark-state voltage curve on the pixel circuits on a first activated scanning line using a first voltage amplitude and a second voltage amplitude, respectively,
wherein the first voltage amplitude is lower than the second voltage amplitude.
